# EUROPEAN PATENT SPECIFICATION

(11) **EP 3 764 186 B1**
(45) Date of publication and mention of the grant of the patent: **20.03.2024**
(21) Application number: 18909108.5
(22) Date of filing: 03.01.2019
(51) Int. Cl.: G05D 1/02, A47L 11/28

(54) **METHOD FOR CONTROLLING AUTONOMOUS MOBILE ROBOT TO TRAVEL ALONG EDGE**
VERFAHREN ZUR STEUERUNG EINES AUTONOMEN MOBILEN ROBOTERS ZUR BEWEGUNG ENTLANG EINER KANTE
PROCÉDÉ DE COMMANDE DE DÉPLACEMENT DE ROBOT MOBILE AUTONOME LE LONG D'UN BORD

(30) Priority: 09.03.2018 CN 201810193172
(43) Date of publication of application: 13.01.2021
(73) Proprietor: Amicro Semiconductor Co., Ltd., Hengqin New District Zhuhai City, Guangdong 519000 (CN)
(72) Inventor: LAI, Qinwei, Zhuhai, Guangdong 519000 (CN); XIAO, Gangjun, Zhuhai, Guangdong 519000 (CN); HUANG, Taiming, Zhuhai, Guangdong 519000 (CN)
(74) Representative: HGF
(86) International application number: PCT/CN2018/120181
(87) International publication number: WO 2019/169920

(56) References cited:
- CN-A- 101 778 588
- CN-A- 103 099 586
- CN-A- 104 757 909
- CN-A- 106 239 528
- CN-A- 106 840 168
- CN-A- 108 196 555
- JP-A- H10 105 233
- JP-A- 2005 211 366
- JP-A- 2017 091 246
- TAE-KYEONG LEE ET AL: "Sector-based maximal online coverage of unknown environments for cleaning robots with limited sensing", ROBOTICS AND AUTONOMOUS SYSTEMS, ELSEVIER BV, AMSTERDAM, NL, vol. 59, no. 10, 13 May 2011 (2011-05-13), pages 698-710, XP028264988, ISSN: 0921-8890, DOI: 10.1016/J.ROBOT.2011.05.005 [retrieved on 2011-05-31]

## Description

### Technical Field

The present invention relates to the field of robots, and in particular to an along-edge walking control method for an autonomous mobile robot.

### Background

An existing cleaning robot, when moving in a region required to be cleaned, may autonomously scrub a floor or suck wastes on the floor by use of a vacuum cleaner in a certain running mode. At present, a relatively common running mode includes a random direction cleaning mode. This mode refers to that none path plan is designed for the cleaning robot and, when encountering an obstacle during walking, the cleaning robot randomly turns a certain angle to continue walking for cleaning. It can be seen that this mode is easy to control and does not require so many high-accuracy sensors, so that the cost is relatively low. However, it is likely that some places are not cleaned but some other places are repeatedly cleaned, and the cleaning efficiency is relatively low.

"Sector-based maximal online coverage of unknown environments for cleaning robots with limited sensing", Tae-Kyeong Lee et al, 13 May 2011, discloses an integrated coverage strategy for low-cost cleaning robots, demonstrating respectable coverage performance in most unknown environments. The proposed algorithm can efficiently cope with hardware limitations ranging from low computational power to numerous sensing problems arising from limited range, sparse data and detection uncertainty. The coverage strategy performs simultaneous exploration, incremental sector creations, sector cleaning, and localizations, with the intention of maximizing performance with minimal sensing.

### Summary

The invention is set out in the appended set of claims.

### Brief Description of the Drawings

Fig. 1 is a flowchart of an along-edge walking control method for an autonomous mobile robot according to an embodiment of the present invention.
Fig. 2 is an analysis schematic diagram of along-edge walking of an autonomous mobile robot according to an embodiment of the present invention.

### Detailed Description

The technical solutions in embodiments of the present invention will be described below in combination with the drawings in the embodiments of the present invention in detail. It should be understood that the specific embodiments described below are adopted not to limit the present invention but only to explain the present invention.

A robot of the present invention is an intelligent cleaning robot (for example, a sweeping robot or a mopping robot). All robots mentioned in the following embodiments refer to intelligent cleaning robots. These robots may automatically walk in some places by virtue of certain artificial intelligence. A robot body is provided with various sensors, may detect a walking distance, a walking angle, a body state, an obstacle and the like, for example, may automatically turn in front of a wall or another obstacle, may walk along different routes as planned according to different settings and may also construct a grid map according to various data detected in a walking process. The robot of the present invention includes the following structures: the robot body with a left driving wheel and a right driving wheel and capable of autonomously walking, a human-computer interaction interface arranged on the body and an obstacle detection unit arranged on the body. An inertia sensor is arranged in the body, and the inertia sensor includes an accelerometer, a gyroscope and the like. Odometers (usually code discs) configured to detect walking distances of the driving wheels are arranged on the two driving wheel, and a control component capable of processing a parameter of the related sensor and outputting a control signal to an execution component is further arranged.

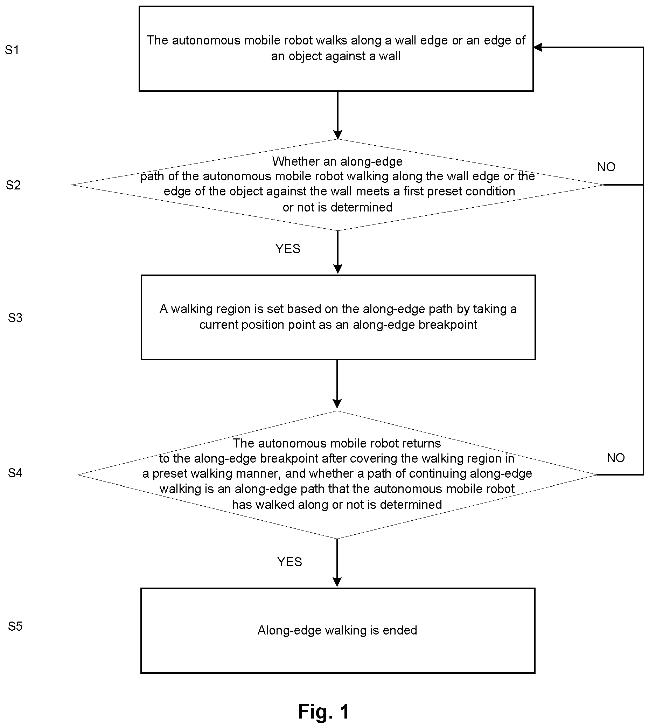

An along-edge walking control method for an autonomous mobile robot in Fig. 1 includes the following steps: S1: the autonomous mobile robot walks along a wall edge or an edge of an object against a wall; S2: whether an along-edge path of the autonomous mobile robot walking along the wall edge or the edge of the object against the wall meets a first preset condition or not is determined, when determining that the along-edge path meets the first preset condition, S3 is entered, and when determining that the along-edge path does not meet the first preset condition, S1 is re-executed; S3: a walking region is set based on the along-edge path by taking a current position point as an along-edge breakpoint; S4: the autonomous mobile robot returns to the along-edge breakpoint after covering the walking region in a preset walking manner, whether a path of continuing along-edge walking is an along-edge path that the autonomous mobile robot has walked along or not is determined, when determining that the path of continuing along-edge walking is not the along-edge path that the autonomous mobile robot has walked along, S1 is re-executed, and when determining that the path of continuing along-edge walking is the along-edge path that the autonomous mobile robot has walked along, S5 is entered; and S5: along-edge walking is ended. Since a region enclosed by the wall edge and the edge of the object against the wall (for example, a sofa and a television bench) in a two-dimensional plane graph of the whole indoor physical environment is a global region to be cleaned by the autonomous mobile robot, the autonomous mobile robot may walk around a boundary of the global region when walking along the wall edge or the edge of the object against the wall (called long-edge walking hereinafter for short). When the autonomous mobile robot starts along-edge walking, it is necessary to detect and determine whether the along-edge path of along-edge walking meets the first preset condition or not in real time. The first preset condition is a condition of determining whether the walking region may be constructed or not, and the first preset condition may be set according to a specific design requirement. For example, it is set to be that the along-edge path reaches a certain length, and/or an angle change of the along-edge path is greater than a preset value, and/or whether the along-edge path includes a straight edge or not. If the first preset condition is met, the autonomous mobile robot determines the current position point as the along-edge breakpoint and then sets the walking region based on the along-edge path. A manner for setting the walking region may be set according to the specific design requirement. For example, the along-edge path horizontally and vertically extends from two endpoints to a region on an inner side of the along-edge path, and a region enclosed after extension by a certain length is determined as the walking region. Or, a certain position point in the region on the inner side of the along-edge path is determined as a common point, and a region enclosed by extension from the two endpoints of the along-edge path to the common point is the walking region. A manner for setting the walking region may also be a dynamic adjustment setting manner, to meet seamless connection of adjacent walking regions. For example, after an approximately square region is set as a walking region according to the abovementioned manner, when the next is set, the previous walking region may be adaptively adjusted to a region in a triangular shape based on a square boundary of the previous walking region and a shape of a current along-edge path, the triangular region and the square region sharing an edge. After the walking region is set, the autonomous mobile robot covers the walking region in the preset walking manner from the breakpoint. The preset walking manner may also be set according to the specific design requirement, for example, a manner of walking according to a path shaped like a Chinese character "Gong", an artificial potential field control walking manner or an artificial intelligent control walking manner. After the walking region is covered and cleaned according to the set walking manner, the autonomous mobile robot returns to the along-edge breakpoint corresponding to the walking region, and then determines whether a path of continuing along-edge walking is an along-edge path that the autonomous mobile robot has walked along or not. For example, if it is detected that the current along-edge breakpoint or a next position point is a starting position point of an along-edge path at the beginning of along-edge walking, it is determined that the path of continuing along-edge walking is the along-edge path that the autonomous mobile robot has walked along. If it is determined that the path of continuing along-edge walking is the along-edge path that the autonomous mobile robot has walked along, it is indicated that the autonomous mobile robot has completed walking around the global map for a circle and may stop along-edge walking to avoid repeated cleaning. Finally, a region that is not covered and cleaned in a middle part of the global map is covered and cleaned. Of course, if an area required to be covered is relatively small or a range of the walking region is set to be relatively large, the middle part may be cleaned together during along-edge cleaning, and the middle part is not required to be additionally cleaned. If it is determined that the path of continuing along-edge walking is not the along-edge path that the autonomous mobile robot has walked along, along-edge walking and walking region setting are continued to be performed according to the abovementioned manners till along-edge walking for a circle, and then the region that is not covered and cleaned in the middle part of the global map is covered and cleaned. According to the method of the embodiment, planning and covering the walking region in such an along-edge waling manner may effectively solve the problem of region missing or repeated cleaning and may not only improve the cleaning efficiency in an open environment but also make it easy for the cleaning robot to find entrances and exits of rooms to implement complete cleaning of each room with high cleaning efficiency.

As one implementation mode, before S1, the following steps are further included: S01: the autonomous mobile robot determines whether an along-edge sensor on a side edge of a body of the autonomous mobile robot detects any obstacle or not, when the along-edge sensor detects the obstacle, S02 is directly entered, when the along-edge sensor does not detect the obstacle, the autonomous mobile robot walks straight ahead until an obstacle sensor at a front end of the body detects an obstacle, a walking direction of the autonomous mobile robot is adjusted to enable the along-edge sensor to detect the obstacle and then S02 is entered; S02: the autonomous mobile robot walks along an edge of the obstacle according to a distance, detected by the along-edge sensor, between the body and the obstacle, and the distance between the body and the obstacle is kept a first preset distance; S03: whether a current along-edge walking path of the autonomous mobile robot is shorter than a first preset length or not and whether a turning angle of the autonomous mobile robot is larger than a first preset angle or not are determined, when the current along-edge walking path is shorter than the first preset length and the turning angle is larger than the first preset angle, it is determined that the autonomous mobile robot does not walk along the wall edge or the edge of the object against the wall and S04 is entered, and when the current along-edge walking path is not shorter than the first preset length and/or the turning angle is not larger than the first preset angle, it is determined that the autonomous mobile robot walks along the wall edge or the edge of the object against the wall and S2 is entered; and S04: the autonomous mobile robot turns a second preset angle and walks straight ahead until the obstacle sensor at the front end of the body detects an obstacle, the walking direction of the autonomous mobile robot is adjusted to enable the along-side sensor to detect the obstacle and then S02 is entered. Since the autonomous mobile robot does not know whether the autonomous mobile robot is at the wall edge or the edge of the object against the wall or not when starting walking, it is necessary to detect whether there is any obstacle on the side edge of the body or not through the along-edge sensor on the side edge of the body. When there is none obstacle, it is indicated that the autonomous mobile robot is not close to another object, the autonomous mobile robot is required to walk straight ahead to find an edge of an obstacle. When the autonomous mobile robot walks straight ahead until the obstacle sensor at the front end of the body detects an obstacle, the autonomous mobile robot does not know that the obstacle the autonomous mobile robot collides with is, and the autonomous mobile robot is required to adjust the direction to enable the along-edge sensor to detect the obstacle. Then, the autonomous mobile robot walks along an edge of the obstacle according to a distance, detected by the along-edge sensor, between the body and the obstacle, and in a walking process, the distance between the body and the obstacle is kept the first preset distance (the first preset distance may be set according to the specific design requirement, and optionally, may be set to be one centimeter). When a path of the autonomous mobile robot keeping walking along the edge of the obstacle is shorter than the first preset length (the first preset length may be set according to the specific design requirement, and optionally, may be set to be six meters) and a turning angle of the autonomous mobile robot is larger than the first preset angle (the first preset angle may be set according to the specific design requirement, and optionally, may be set to be 270°), it may be determined that the autonomous mobile robot does not walk along the wall edge or the edge of the object against the wall. In a common family, a size of an isolated object may usually not be too large, namely an object not against the wall may not occupy a too large area, a dining table or a tea table may occupy a relatively large area, and edges of these obstacles may not be too long. Therefore, when the autonomous mobile robot walks along the edge of the obstacle by a distance not longer than six meters and a gyroscope detects that the autonomous mobile robot has turned 270°, it is indicated that the autonomous mobile robot walks around in a relatively small range and the obstacle of which the autonomous mobile robot walks along the edge is an isolated object and is not the wall edge or the object against the wall. When the autonomous mobile robot walks along the wall edge or the edge of the object against the wall, it is necessary to walk by a long distance to ensure that an angle detected by the gyroscope is large or reaches 360°. For example, when an angle change detected by the gyroscope is 360° after the autonomous mobile robot walks by 30 meters, it may be considered that the autonomous mobile robot walks around the indoor boundary for a circle. In such case, the autonomous mobile robot stops along-edge walking, then turns the second preset angle (the second preset angle may be set according to the specific design requirement, and optionally, may be set to be 90°), walks straight ahead to find an edge of a next obstacle, when the obstacle sensor at the front end of the body detects the obstacle, adjusts the direction to enable the along-edge sensor to detect the obstacle, and then repeats the step of walking along the edge of the obstacle and determining whether the obstacle is the wall edge or the object against the wall or not. The same operations are executed until the autonomous mobile robot finds the wall edge or the edge of the object against the wall.

When the autonomous mobile robot detects that there is an obstacle on the side edge of the body at the beginning, it is indicated that the autonomous mobile robot is at an edge of a certain object but not always the wall edge or the edge of the object against the wall. In such case, the autonomous mobile robot may directly start walking along the edge of the obstacle and determine whether the obstacle is an isolated object or the wall edge or the object against the wall according to the same manner. If NO, the autonomous mobile robot adjusts the direction according to the second preset angle and continues finding and determining whether the edge of the next obstacle is the wall edge or the edge of the object against the wall or not. The same operations are executed until the autonomous mobile robot finds the wall edge or the edge of the object against the wall.

According to the control method of the embodiment, the step that the autonomous mobile robot finds the wall edge or the edge of the object against the wall is added, so that the purpose of along-edge walking for cleaning in the previous embodiment may be smoothly achieved regardless of an initial position of the autonomous mobile robot, the application range of the autonomous mobile robot is enlarged, and the problem of low cleaning efficiency caused by blind walking under the condition that the autonomous mobile robot is not at the wall edge or the edge of the object against the wall at the beginning is solved.

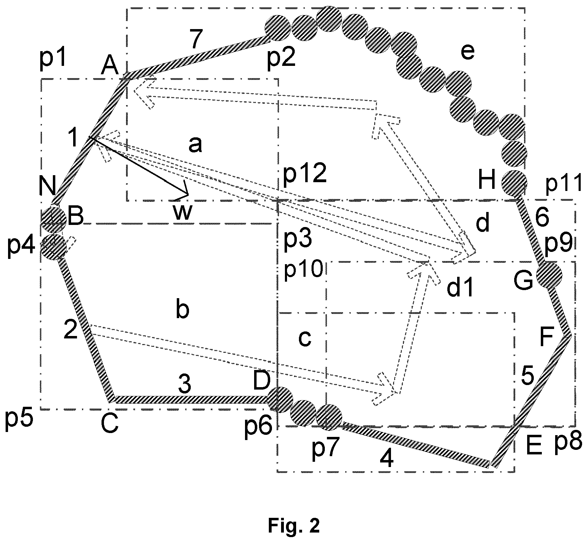

As one implementation mode, the operation in S2 that whether the along-edge path of the autonomous mobile robot walking along the wall edge or the edge of the object against the wall meets the first preset condition or not is determined includes the following steps: S21: an XY-axis coordinate system is established by taking a starting position point of the along-edge path as an origin; and S22: whether a horizontal length of the along-edge path of the autonomous mobile robot walking along the wall edge or the edge of the object against the wall in an X-axis direction is equal to a second preset length or not is determined, or whether a vertical length of the along-edge path of the autonomous mobile robot walking along the wall edge or the edge of the object against the wall in a Y-axis direction is equal to a third preset length or not is determined, when the horizontal length is equal to the second preset length, or the vertical length is equal to the third preset length, it is determined that the along-edge path of the autonomous mobile robot walking along the wall edge or the edge of the object against the wall meets the first preset condition, when the horizontal length is not equal to the second preset length and the vertical length is not equal to the third preset length, it is determined that the along-edge path of the autonomous mobile robot walking along the wall edge or the edge of the object against the wall does not meet the first preset condition. Since the autonomous mobile robot plans the walking region in an along-edge walking manner, it is necessary to know a specific position where the walking region may be set when the autonomous mobile robot walks along the edge to the position. Therefore, through the determination step of the embodiment, the autonomous mobile robot may walk along the edge as planned to achieve the purpose of efficient cleaning. As shown in Fig. 2, long straight edges marked by numbers one to seven are wall edges, an along-edge path of the autonomous mobile robot walking along the wall edge is a straight path, the small circle represents the object against the object, and an along-edge path of the autonomous mobile robot walking along the edge of the object against the wall is not a straight path. During along-edge walking of the autonomous mobile robot, the along-edge walking path is in a region enclosed by the wall edge and the object against the wall. For example, during walking along a wall edge AB, an along-edge path is on a right side of the wall edge AB, and during walking along a wall edge CD, an along-edge path is on an upper side of the wall edge CD. For convenient description, routes AB, BC and CD, etc. in Fig. 2 may also be directly represented as along-edge paths in the embodiment and the other embodiments. The dotted arrow indicates an overall walking direction of the autonomous mobile robot. At first, the autonomous mobile robot establishes an XY-axis coordinate system by taking a starting position point (the point A) of along-edge walking as an origin (the coordinate system is not shown in the figure, and it is default that the horizontal direction in the figure is an X-axis direction and the vertical direction in the figure is a Y-axis direction) and then detects a walking distance and direction at the same time of walking. When the autonomous mobile robot walks to the point B, the along-edge path AB that it passes reaches the third preset length (the third preset length may be set according to the specific design requirement, and is set to be four meters in the embodiment) in the Y-axis direction. In such case, the autonomous mobile robot determines that the along-edge path AB of along-edge walking meets the first preset condition and may set a walking region a based on the along-edge path AB. The autonomous mobile robot, after completing covering and cleaning the walking region a, returns to the point B and continues along-edge walking by taking the point B as a starting position point of a next along-edge path. When the autonomous mobile robot walks to the point C, a horizontal length of the along-edge path BC in the X-axis direction does not reach the second preset length and a vertical length in the Y-axis direction does not reach the third preset length, so that the autonomous mobile robot continues along-edge walking. When the autonomous mobile robot walks to the point D, a horizontal length of the along-edge path BD in the X-axis direction reaches the second preset length (the second preset length may be set according to the specific design requirement, and is set to be five meters in the embodiment), and meanwhile, a vertical length of the along-edge path BD in the Y-axis direction reaches the third preset length, so that the autonomous mobile robot determines that the along-edge path BD of along-edge walking meets the first preset condition and may set a walking region b based on the along-edge path BD. According to the same manner, the autonomous mobile robot continues along-edge walking and sets a corresponding walking region. According to the method of the embodiment, two lengths, i.e., the second preset length and the third preset length, are set for a purpose of providing a reference for subsequent walking region setting to ensure that the set walking region is appropriate in size to facilitate improvement of a region coverage effect of the autonomous mobile robot.

As one implementation mode, the operation in S2 that whether the along-edge path of the autonomous mobile robot walking along the wall edge or the edge of the object against the wall meets the first preset condition or not is determined includes the following steps: S21: a XY-axis coordinate system is established by taking a starting position point of the along-edge path as an origin; S22: whether the horizontal length of the along-edge path of the autonomous mobile robot walking along the wall edge or the edge of the object against the wall in a X-axis direction is equal to a second preset length or not is determined, or whether a vertical length of the along-edge path of the autonomous mobile robot walking along the wall edge or the edge of the object against the wall in a Y-axis direction is equal to a third preset length or not is determined, when the horizontal length is equal to the second preset length, or the vertical length is equal to the third preset length S23 is entered, when the horizontal length is not equal to the second preset length and the vertical length is not equal to the third preset length, S21 is re-executed; and S23: whether the along-edge path includes a positioning edge extending in a linear direction or not is determined, when the along-edge path comprises the positioning edge, it is determined that the along-edge path of the autonomous mobile robot walking along the wall edge or the edge of the object against the wall meets the first preset condition, when the along-edge path does not comprise the positioning edge, the autonomous mobile robot continues walking along the wall edge or the edge of the object against the wall until the along-edge path includes the positioning edge extending in the linear direction and it is determined that the along-edge path of the autonomous mobile robot walking along the wall edge or the edge of the object against the wall meets the first preset condition. A main difference between the method of the embodiment and the previous embodiment is that a determination condition that the along-edge path is required to include a positioning edge is added. The positioning edge is determined by the autonomous mobile robot based on the angle change detected by the gyroscope at the same time of along-edge walking. When the autonomous mobile robot detects that the autonomous mobile robot keeps walking by more than a certain distance (the distance may be set to be any value of one meter to three meters) in the same angle direction, it is indicated that all edges that the autonomous mobile robot walks along are straight edges. Of course, due to a detection error, all angles in a certain error range may be considered as the same angle direction. For example, if the angle change detected by the gyroscope is a change ranging from 38° to 42°, it may be considered that the autonomous mobile robot keeps walking in a 40° direction. Adding the determination condition is favorable for the autonomous mobile robot to subsequently return to the region timely and walk along the positioning edge for deviation correction when a walking deviation is relatively great. As shown in Fig. 2, each of the walking regions a and e includes a positioning edge, and each of the walking regions b, c and d includes two positioning edges. The autonomous mobile robot, after completing walking to cover the walking region a and the walking region b from the starting position point (the point A), may return to the positioning edge corresponding to the walking region a, then walk along the straight edge and correct a walking deviation generated before. The autonomous mobile robot, after completing correction, returns to an along-edge breakpoint (the point D) corresponding to the region b and continues determining a next along-edge path. In addition, the autonomous mobile robot may return to previous two or three positioning edges for deviation correction every time when completing walking to cover two or three walking regions, and may also return to the positioning edge closest to the current position for deviation correction. Therefore, according to the method of the embodiment, whether the along-edge path meets the first preset condition or not is determined by combining the length of the along-edge path and a feature of the straight edge to ensure higher accuracy and higher efficiency of along-edge path planning of the autonomous mobile robot for cleaning.

As one implementation mode, the operation in S3 that the walking region is set based on the along-edge path by taking the current position point as the along-edge breakpoint includes the following steps: S311: a current position point is determined as an along-edge breakpoint; S312: two position points at a longest distance in the X-axis direction in the along-edge path are determined as first reference points, reference vertical lines passing the first reference points in the Y-axis direction are constructed, two position points at a longest distance in the Y-axis direction in the along-edge path are determined as second reference points, and reference horizontal lines passing the second reference points in the X-axis direction are constructed; S313: whether a vertical distance between the two reference vertical lines is equal to the second preset length or not is determined, when the vertical distance is equal to the second preset length, the reference vertical lines are determined as vertical boundary lines and S314 is entered, when the vertical distance is not equal to the second preset length, the reference horizontal lines are determined as horizontal boundary lines and S315 is entered; S314: whether a vertical distance between the two reference horizontal lines is equal to the third preset length or not is determined, when the vertical distance is equal to the third preset length, the two reference horizontal lines are determined as the horizontal boundary lines, and when the vertical distance is not equal to the third preset length, a reference horizontal line on an outer side of the along-edge path is determined as one horizontal boundary line, a horizontal line which is on an inner side of the along-edge path and parallel to the reference horizontal line and of which a vertical distance with the reference horizontal line on the outer side of the along-edge path is equal to the third preset length is determined as the other horizontal boundary line and a region enclosed by the along-edge path and the vertical boundary line and horizontal boundary line on the inner side of the along-edge path is determined as the walking region; and S315: whether the vertical distance between the two reference vertical lines is equal to the second preset length or not is determined, when the vertical distance is equal to the second preset length, the two reference vertical lines are determined as the vertical boundary lines, and when the vertical distance is not equal to the second preset length, the reference vertical line on the outer side of the along-edge path is determined as one vertical boundary line, a vertical line which is on the inner side of the along-edge path and parallel to the reference vertical line and of which a vertical distance with the reference vertical line on the outer side of the along-edge path is equal to the second preset length is determined as the other vertical boundary line and a region enclosed by the along-edge path and the vertical boundary line and horizontal boundary line on the inner side of the along-edge path is determined as the walking region. As shown in Fig. 2, when the autonomous mobile robot walks along the edge from the point A to the point B, if it is determined that the along-edge path of along-edge walking of the autonomous mobile robot meets the first preset condition, the point B is determined as an along-edge breakpoint, then the point A and point B at a longest distance in the X-axis direction (i.e., the horizontal direction in Fig. 2) in the along-edge path AB are determined as first reference points, the point A and point B at a longest distance in the Y-axis direction (i.e., the vertical direction in Fig. 2) in the along-edge path AB are determined as second reference points, and two reference vertical lines and two reference horizontal lines passing the point A and the point B respectively are constructed. A vertical distance between the two reference horizontal lines is equal to the third preset length (the third preset length is the same as the third preset length in the previous embodiment, i.e., a length of a straight line

p4 or a length of a straight line p2p3), so that the two reference horizontal lines are determined as horizontal boundary lines (i.e., a straight line p1p2 and a straight line p4p3). A vertical distance between the two reference vertical lines is smaller than the second preset length (the second preset length is the same as the second preset length in the previous embodiment), so that the reference vertical line on an outer side of the along-edge path AB (i.e., the left side of the line AB in the figure) is determined as one vertical boundary line (i.e., the straight line p1p4), a vertical line which is on an inner side of the along-edge path AB (i.e., the right side of the line AB in the figure) and parallel to the reference vertical line and of which a vertical distance with the reference vertical line on the outer side of the along-edge path is equal to the second preset length (i.e., a length of the straight line p4p3) is determined as the other vertical boundary line (i.e., the straight line p2p3). In such case, a dashed box marked by p1p2p3p4 forms a rectangular region, and a region enclosed by the along-edge path AB and the vertical boundary line and horizontal boundary line on the inner side of the along-edge path AB (i.e., a region marked by Ap2p3B) in the rectangular region is finally determined as a walking region (i.e., the region a).

The autonomous mobile robot, after completing walking to cover the region a, returns to the point B and continues along-edge walking by taking the point B as a starting position point of a next along-edge path. When the autonomous mobile robot walks along the edge from the point B to the point D, and it is determined that the along-edge path of along-edge walking of the autonomous mobile robot meets the first preset condition, the point D is determined as an along-edge breakpoint. Similarly, the point B and point D in the along-edge path BD are determined as first reference points and second reference points, reference horizontal lines and reference vertical lines are constructed based on the point B and the point D, and a region enclosed by the along-edge path BD and a vertical boundary line and horizontal boundary line on the inner side of the along-edge path BD (i.e., a region marked by Bp3DC) is finally determined as a walking region (i.e., the region b). The other walking regions are set in the same manner.

According to the method of the embodiment, the walking regions are constructed based on the shapes of the along-edge paths, the reference horizontal lines and the reference vertical lines, so that the walking regions may be seamlessly connected better, the problem of repeated cleaning or region missing is solved, and the cleaning efficiency of the autonomous mobile robot is improved.

As one implementation mode, the operation in S3 that the walking region is set based on the along-edge path by taking the current position point as the along-edge breakpoint includes the following steps: S321: a current position point is determined as an along-edge breakpoint; S322: two position points at a longest distance in the X-axis direction in the along-edge path are determined as first reference points, reference vertical lines passing the first reference points in the Y-axis direction are constructed, two position points at a longest distance in the Y-axis direction in the along-edge path are determined as second reference points, and reference horizontal lines passing the second reference points in the X-axis direction are constructed; S323: whether a vertical distance between the two reference vertical lines is equal to the second preset length or not is determined, when the vertical distance is equal to the second preset length, the reference vertical lines are determined as vertical boundary lines and S324 is entered, when the vertical distance is not equal to the second preset length, the reference horizontal lines are determined as horizontal boundary lines and S325 is entered; S324: whether a vertical distance between the two reference horizontal lines is equal to the third preset length or not is determined, when the vertical distance is equal to the third preset length, the two reference horizontal lines are determined as the horizontal boundary lines, and when the vertical distance is not equal to the third preset length, the reference horizontal line on the outer side of the along-edge path is determined as one horizontal boundary line, a horizontal line which is on the inner side of the along-edge path and parallel to the reference horizontal line and of which a vertical distance with the reference horizontal line on the outer side of the along-edge path is equal to the third preset length is determined as the other horizontal boundary line, a region enclosed by the along-edge path and the vertical boundary line and horizontal boundary line on the inner side of the along-edge path is determined as a planned walking region and S326 is entered; S325: whether the vertical distance between the two reference vertical lines is equal to the second preset length or not is determined, when the vertical distance is equal to the second preset length, the two reference vertical lines are determined as the vertical boundary lines, and when the vertical distance is not equal to the second preset length, the reference vertical line on the outer side of the along-edge path is determined as one vertical boundary line, a vertical line which is on the inner side of the along-edge path and parallel to the reference vertical line and of which a vertical distance with the reference vertical line on the outer side of the along-edge path is equal to the second preset length is determined as the other vertical boundary line, a region enclosed by the along-edge path and the vertical boundary line and horizontal boundary line on the inner side of the along-edge path is determined as the planned walking region and S326 is entered; S326: whether an overlapping area between the planned walking region and a walking region previously determined is larger than a preset proportion value of an area of the planned walking region or not is determined, when the overlapping area is larger than the preset proportion value of the area, S327 is entered, and when the overlapping area is not larger than the preset proportion value of the area, a region left after a region of the overlapping area is subtracted from the planned walking region is determined as a walking region and S4 is entered; S327: the along-edge breakpoint currently determined is canceled, and the autonomous mobile robot continues walking along the wall edge or the edge of the object against the wall until an along-edge path of walking along the wall edge or the edge of the object against the wall meets a second preset condition; S328: a current position point is determined as an along-edge breakpoint; S329: two position points at a longest distance in the X-axis direction in the along-edge path between the current along-edge breakpoint and the previous along-edge breakpoint are determined as first reference points, reference vertical lines passing the first reference points in the Y-axis direction are constructed, two position points at a longest distance in the Y-axis direction in the along-edge path are determined as second reference points, reference horizontal lines passing the second reference points in the X-axis direction are constructed, whether a vertical distance between the two reference vertical lines is equal to a fourth preset length or not is determined, when the vertical distance is equal to the fourth preset length, the reference vertical lines are determined as vertical boundary lines and S330 is entered, when the vertical distance is not equal to the fourth preset length, the reference horizontal lines are determined as horizontal boundary lines and S331 is entered; S330: whether a vertical distance between the two reference horizontal lines is equal to a fifth preset length or not is determined, when the vertical distance is equal to the fifth preset length, the two reference horizontal lines are determined as the horizontal boundary lines, and when the vertical distance is not equal to the fifth preset length, the reference horizontal line on the outer side of the along-edge path is determined as one horizontal boundary line, a horizontal line which is on the inner side of the along-edge path and parallel to the reference horizontal line and of which a vertical distance with the reference horizontal line on the outer side of the along-edge path is equal to the fifth preset length is determined as the other horizontal boundary line, and a region left after a region of the overlapping area is subtracted from a region enclosed by the along-edge path and the vertical boundary line and horizontal boundary line on the inner side of the along-edge path is determined as the walking region; S331: whether the vertical distance between the two reference vertical lines is equal to the fourth preset length or not is determined, when the vertical distance is equal to the fourth preset length, the two reference vertical lines are determined as the vertical boundary lines, and when the vertical distance is not equal to the fourth preset length, the reference vertical line on the outer side of the along-edge path is determined as one vertical boundary line, a vertical line which is on the inner side of the along-edge path and parallel to the reference vertical line and of which a vertical distance with the reference vertical line on the outer side of the along-edge path is equal to the fourth preset length is determined as the other vertical boundary line, and a region left after a region of the overlapping area is subtracted from a region enclosed by the along-edge path and the vertical boundary line and horizontal boundary line on the inner side of the along-edge path is determined as the walking region. A main difference between the method of the embodiment and the previous embodiment is that the steps of determination about planned region overlapping and processing in case of overlapping are added. When the overlapping area is relatively large, it is indicated that an area required to be covered and cleaned in a region currently constructed by the autonomous mobile robot is relatively small. When the small-area region is directly covered and cleaned, the cleaning efficiency of the autonomous mobile robot is relatively low, so that it is necessary to extend a pre-constructed region, and the autonomous mobile robot cleans when an area that may be practically effectively cleaned is relatively large. As shown in Fig. 2, the autonomous mobile robot, after completing covering and cleaning the region c, returns to the along-edge breakpoint E and continues along-edge walking by taking the point E as a starting position point of a next along-edge path. When the autonomous mobile robot walks to the point G, and it is determined that the along-edge path meets the first preset condition, the point G is determined as an along-edge breakpoint. Two reference vertical lines are constructed based on first reference points (the point E and the point F) of the along-edge path EG, and two reference horizontal lines are constructed based on two second reference points (the point E and the point G). A vertical distance between the two reference horizontal lines is equal to the third preset length (the same as the third preset length in the abovementioned embodiments), so that the two reference horizontal lines are determined as horizontal boundary lines (i.e., a straight line p7p8 and a straight line p9p10). A vertical distance between the two reference vertical lines is unequal to the second preset length (the same as the second preset length in the abovementioned embodiments), so that the reference vertical line on an outer side of the along-edge path EG is determined as one vertical boundary line (i.e., a straight line p8p9), and a vertical line which is on an inner side of the along-edge path EG and parallel to the reference vertical line and of which a vertical distance with the reference vertical line on the outer side of the along-edge path is equal to the second preset length is determined as the other vertical boundary line (i.e., a straight line p7p10). Lengths of both the straight line p7p8 and the straight line p9p10 are the third preset length, optionally five meters. Lengths of both the straight line p8p9 and the straight line p7p10 are the second preset length, optionally four meters. Then, a region enclosed by the along-edge path EG and the vertical boundary line and horizontal boundary line on the inner side of the along-edge path EG is determined as a planned walking region (i.e., a region d1 marked by p7EFGp10). It can be seen from the figure that an overlapping area between the region d1 and the region c is very large, larger than 50% (i.e., the preset proportion value, the proportion value may be set according to the specific design requirement and may also be set to be 60%, 65% or 70%, etc.) of an area of the region d1. When the autonomous mobile robot directly covers and cleans the region d1, the autonomous mobile robot almost works for repeated cleaning, and the working efficiency is relatively low. Therefore, it is necessary to extend the region d1. The currently determined along-edge breakpoint is canceled at first (namely the point G is no more the along-edge breakpoint), and then the autonomous mobile robot continues walking along the wall edge or the edge of the object against the wall till to the point H. In such case, a vertical length of the along-edge path EH of the autonomous mobile robot walking along the wall edge or the edge of the object against the wall in the Y-axis direction is equal to the fifth preset length, namely the along-edge path EH of the autonomous mobile robot walking along the wall edge or the edge of the object against the wall meets the second preset condition, so that the autonomous mobile robot determines the point H as an along-edge breakpoint, constructs two reference vertical lines based on first reference points (the point E and the point F) of the along-edge path EH and constructs two reference vertical lines based on second reference points (the point E and the point H). A vertical distance between the two reference horizontal lines is equal to the fifth preset length (the fifth preset length may be set according to the specific design requirement, and optionally, may be set to be six meters), so that the two reference horizontal lines are determined as horizontal boundary lines (i.e., a straight line p6p8 and a straight line p11 p12). A vertical distance between the two reference vertical lines is unequal to the fourth preset length (the fourth preset length may be set according to the specific design requirement, and optionally, may be set to be eight meters), so that the reference vertical line on an outer side of the along-edge path EH is determined as one vertical boundary line (i.e., a straight line p8p11), a vertical line which is on an inner side of the along-edge path EH and parallel to the reference vertical line and of which a vertical distance with the reference vertical line on the outer side of the along-edge path is equal to the fourth preset length is determined as the other vertical boundary line (i.e., a straight line p6p12), and a region left after a region of the overlapping area (i.e., an intersected region of a region marked by EFHp12p6 and the region c) is subtracted from a region enclosed by the along-edge path EH and the vertical boundary line and horizontal boundary line on the inner side of the along-edge path EH (i.e., the region marked by EFHp12p6) is finally determined as a walking region (i.e., the region d). According to the cleaning region extension method of the embodiment, the cleaning efficiency of the autonomous mobile robot may be effectively improved.

As one implementation mode, the operation in S327 that the autonomous mobile robot walks until the along-edge path of walking along the wall edge or the edge of the object against the wall meets the second preset condition includes the following steps: S3271: an XY-axis coordinate system is established by taking a starting position point of the along-edge path as an origin; and S3272: whether a horizontal length of the along-edge path of the autonomous mobile robot walking along the wall edge or the edge of the object against the wall in the X-axis direction is equal to the fourth preset length or not is determined, or whether a vertical length of the along-edge path of the autonomous mobile robot walking along the wall edge or the edge of the object against the wall in the Y-axis direction is equal to the fifth preset length or not is determined, when the horizontal length is equal to the fourth preset length or the vertical length is equal to the fifth preset length, it is determined that the along-edge path of the autonomous mobile robot walking along the wall edge or the edge of the object against the wall meets the second preset condition, when the horizontal length is not equal to the fourth preset length and the vertical length is not equal to the fifth preset length, it is determined that the along-edge path of the autonomous mobile robot walking along the wall edge or the edge of the object against the wall does not meet the second preset condition. Similarly, since the autonomous mobile robot plans the walking region in an along-edge walking manner, it is necessary to know a specific position where the walking region required to be extended may be set when the autonomous mobile robot continues walking along the edge to the position. Therefore, through the determination step of the embodiment, the autonomous mobile robot may walk along the edge as planned to achieve the purpose of efficient cleaning. As shown in Fig. 2, at first, the autonomous mobile robot establishes an XY-axis coordinate system by taking a starting position point (the point E) of along-edge walking as an origin (the coordinate system is not shown in the figure, and it is default that the horizontal direction in the figure is an X-axis direction and the vertical direction in the figure is a Y-axis direction), then continues walking from the point G and detects a walking distance and direction at the same time of walking. When the autonomous mobile robot walks to the point H, the along-edge path EH that the autonomous mobile robot passes reaches the fifth preset length (the fifth preset length is the same as that in the previous embodiment) in the Y-axis direction. In such case, the autonomous mobile robot determines that the along-edge path EH of along-edge walking meets the second preset condition and may plan a walking region based on the along-edge path EH. According to the method of the embodiment, two lengths, i.e., the fourth preset length and the fifth preset length, are set for a purpose of providing a reference for subsequent walking region planning and setting to ensure that the set walking region is appropriate in size to facilitate improvement of the region coverage effect of the autonomous mobile robot.

As one implementation mode, as shown in Fig. 2, the autonomous mobile robot, after completing covering and cleaning the walking region d, returns to the point H and then continues along-edge walking by taking the point H as an initial position point. A path that the autonomous mobile robot walks along at the beginning is along the edge of the object against the wall, and in such case, even though the length of the along-edge path in the X-axis direction reaches the second preset length or the length in the Y-axis direction reaches the third preset length, the autonomous mobile robot may not stop along-edge walking and construct the walking region. The autonomous mobile robot may keep walking to the wall edge 7 and walking to the point A along the straight path along the wall edge 7. In such case, the along-edge path of the autonomous mobile robot from the point H to the point A includes a positioning edge, and then the autonomous mobile robot starts constructing the walking region based on the along-edge path HA. A manner for constructing the walking region is similar to that in the abovementioned embodiments and will not be elaborated herein, and the difference is that specific parameters of the second preset length and the third preset length are different from parameters in the abovementioned embodiments. In an optional embodiment, the along-edge path that the autonomous mobile robot constructs the walking region according to is required to include a positioning edge, so that the set walking region is planned better. In addition, each walking region includes a positioning edge for positioning correction, so that the autonomous mobile robot may timely perform walking error correction to ensure the walking accuracy of the autonomous mobile robot. The autonomous mobile robot, after completing cleaning the walking region e, returns to the along-edge breakpoint A. Then, it is detected that the along-edge path of continuing along-edge walking is an along-edge path that the autonomous mobile robot has walked along, so that the autonomous mobile robot stops along-edge walking.

As one implementation mode, the inner side of the along-edge path refers to the side, far away from the wall edge or the object against the wall, of the along-edge path. The outer side of the along-edge path refers to the side, close to the wall edge or the object against the wall, of the along-edge path. As shown in Fig. 2, the long straight edges marked by the numbers one to seven are wall edges, the circular small balls are objects against the wall, and the region enclosed by the wall edges and the objects against the wall is the global region required to be cleaned by the autonomous mobile robot. In such case, the autonomous mobile robot walks along the edge in the global region, the inner side of the along-edge path is the side, close to the center of the global region, of the along-edge path, and the outer side of the along-edge path is the other side, far away from the center of the global region, of the along-edge path. For example, in Fig. 2, when the autonomous mobile robot walks along the wall edge AB, the along-edge path is on the right side of the wall edge AB, the side, far away from the wall edge, of the along-edge path is the right side of the along-edge path, and the side, close to the wall edge or the object against the wall, of the along-edge path is the left side of the along-edge path. For example, when the autonomous mobile robot walks along the wall edge CD, the along-edge path is on the upper side of the wall edge CD, the side, far away from the wall edge, of the along-edge path is the upper side of the along-edge path, and the side, close to the wall edge or the object against the wall, of the along-edge path is the lower side of the along-edge path. In an optional embodiment, the inner side and outer side of the along-edge path are distinguished, so that the walking region constructed by the autonomous mobile robot is more accurate, and cleaning actions of the autonomous mobile robot are correspondingly more pertinent.

As one implementation mode, after S1 and before S2, the following steps are further included: S11: a walking path along which the autonomous mobile robot keeps walking along the same direction range by a distance longer than a third preset distance is determined as a straight path according to a position and orientation of the autonomous mobile robot walking along the wall edge or the edge of the object against the wall; S12: a direction vertical to the straight path and pointing to a direction of an inner side of the straight path is recorded as a calibration direction; and S13: the straight path recording position and orientation information and the calibration direction is determined as a positioning edge. In a walking process of the autonomous mobile robot, a walking error may be generated under the influence of factors such as skid of the driving wheel and drift of the gyroscope. There may be a deviation between position data recorded by the autonomous mobile robot and a practical position condition, and the deviation may be increased along with increase of the walking distance of the autonomous mobile robot. Therefore, the autonomous mobile robot is required to correct the walking error after walking by a certain distance or for a certain time. As shown in Fig. 2, the autonomous mobile robot starts walking along the wall edge from the point A and detects and records the position and orientation (i.e., a coordinate position and a coordinate direction) of the autonomous mobile robot at the same time of walking. The autonomous mobile robot keeps walking linearly in the AN direction, so that the detected walking direction is kept unchanged and is always in the same direction range (the angle changing in a certain deviation range may be considered to be kept unchanged, and in the embodiment, angle changing in a range of ±3° may be considered to be in the same direction range). In addition, when the autonomous mobile robot keeps walking till the position of the point N, the walking distance of the autonomous mobile robot has exceeded the third preset distance (the third preset distance may be set according to the specific design requirement, may optionally be set to be any value from two meters to four meters, and in this embodiment, is set to be this meters). Therefore, the autonomous mobile robot records a direction vertical to the straight path AN and pointing to a direction of an inner side of the straight path AN as a calibration direction (i.e., a w direction, the specific side, where the along-edge path is, of the wall body may be known through the direction) and determines the straight path AN as a positioning edge, information corresponding to the positioning edge including position and orientation information (the coordinate position and the coordinate direction) and the calibration direction (the w direction). In an optional embodiment, the positioning edge is set, so that the autonomous mobile robot may correct the walking error through the position and orientation information and calibration information corresponding to the positioning edge to improve the walking accuracy of the autonomous mobile robot and ensure the cleaning effect.

As one implementation mode, before the operation in S4 that whether the path of continuing along-edge walking is the along-edge path that the autonomous mobile robot has walked along or not is determined after the autonomous mobile robot returns to the along-edge breakpoint, the following steps are further included: S41: whether the autonomous mobile robot meets a positioning correction condition or not is determined, when the autonomous mobile robot meets the positioning correction condition, S42 is entered, when the autonomous mobile robot does not meet the positioning correction condition, S4 that whether the path of continuing along-edge walking is the along-edge path that the autonomous mobile robot has walked along or not is determined is entered; S42: one reference position point in a positioning edge first determined is searched; S43: the autonomous mobile robot walks to the reference position point; S44: whether an obstacle is detected in a preset range of the reference position point or not is determined, when the obstacle is detected, the autonomous mobile robot walks along an edge of the obstacle in an along-edge direction and S45 is entered, and when the obstacle is not detected, a reference position point in another adjacent positioning edge is determined and S43 is re-executed; and S45: whether an angle direction of walking along the edge of the obstacle is in an error range of an angle direction of the positioning edge or not is determined, when the angle direction is in the error range, the position and orientation of the autonomous mobile robot are corrected to a position and orientation corresponding to the positioning edge and S4 that whether the path of continuing along-edge walking is the along-edge path that the autonomous mobile robot has walked along or not is determined is entered, and when the angle direction is not in the error range, a reference position point in another adjacent positioning edge is determined and S43 is re-executed. In the walking process of the autonomous mobile robot, the walking error is gradually accumulated along with increase of the walking distance or the walking time, and when the error is corrected in real time, the walking efficiency of the autonomous mobile robot may be very low. Therefore, the autonomous mobile robot is required to correct the error after walking for a certain distance or time, and in such a manner, the walking efficiency is ensured and the walking error may be corrected to meet a requirement on the walking accuracy. In an optional embodiment, after the autonomous mobile robot completes covering the walking region and returns to the along-edge breakpoint corresponding to the region, whether to perform correction is determined, so that cleaning planning of the autonomous mobile robot may be improved, and the condition that the autonomous mobile robot performs error correction in a region cleaning process is avoided. When the autonomous mobile robot returns to the along-edge breakpoint and determines that the positioning correction condition is met, the positioning edge for positioning correction may be searched. The positioning correction condition may be set according to the specific design requirement, for example, after two walking regions are covered and cleaned or after a set cleaning time period (for example, ten minutes) is exceeded. The searched positioning edge may be an adjacent positioning edge or first few positioning edges. In the embodiment, the positioning edge first determined, i.e., the first positioning edge determined when the autonomous mobile robot starts along-edge walking, is searched. Positioning information corresponding to the positioning edge is the most accurate, so that a correction result is more accurate when positioning correction is performed based on the positioning edge first determined. The autonomous mobile robot navigates and walks in form of a grid map based on position points, so that the autonomous mobile robot intended to walk to the positioning edge is required to determine a reference position point in the positioning edge, and then navigates and walks from the current position point to the reference position point. The reference position point may be any position point in the positioning edge, and is optionally a starting position point or middle position point of the positioning edge. The autonomous mobile robot has had a walking error at present, may not accurately reach the reference position point when navigating according to the recorded map, may collide with and detect the positioning edge before reaching the reference position point when navigating according to the map, and may not collide with and detect any obstacle when having reached the reference position point and navigating according to the map. Therefore, when the autonomous mobile robot does not detect any obstacle in the preset range of the reference position point, it is indicated that the error range is too large, and it is necessary to search another positioning edge, optionally an adjacent positioning edge. Then, the autonomous mobile robot navigates and walks to the newly found positioning edge. The preset range of the reference position point may also be set according to the design requirement, and optionally, is set to be a circular range taking the reference position point as a circle center and with a radius of 0.5 meter. If an obstacle is detected, it is indicated that the obstacle may be a positioning edge to be searched, and it is necessary to further determine whether it is a correct positioning edge or not. The autonomous mobile robot walks along the edge of the detected obstacle in the along-edge direction and analyzes whether the current along-edge walking angle direction is in the error range of the angle direction of the recorded positioning edge or not based on data detected by the gyroscope and the odometer. For example, the angle direction of the recorded positioning edge is 45°, and when the currently detected angle direction ranges from 35° to 55°, it is considered in the error range. Of course, the error range may be set according to the specific design requirement, and is set to be for example, ±5°, ±8° or ±12°. When the current along-edge walking angle direction is in the error range of the angle direction of the recorded positioning edge, it may be determined that the edge of the obstacle is the recorded positioning edge. In such case, the position and orientation of the autonomous mobile robot are corrected to a position and orientation corresponding to the positioning edge. For example, when the autonomous mobile robot detects that position and orientation information of two ends of the positioning edge is (X21, Y21, X22, Y22, θ2) and position and orientation information of two ends of the recorded positioning edge is (X11, Y11, X12, Y12, θ1), error position and orientation information is (X21-X11, Y21-Y11, X22-X12, Y22-Y12, θ2-θ1), and the error position and orientation information is subtracted from the current position and orientation information (including recorded map data information) of the autonomous mobile robot to obtain corrected position and orientation information. The autonomous mobile robot, after completing error correction, returns to the original along-edge breakpoint and executes the step that whether the path of continuing along-edge walking is the along-edge path that the autonomous mobile robot has walked along or not is determined. When the current along-edge walking angle direction is not in the error range of the angle direction of the recorded positioning edge, it is indicated that the edge of the currently detected obstacle is not the positioning edge to be searched, so that it is necessary to search another positioning edge, optionally another adjacent positioning edge, and then the autonomous mobile robot navigates and walks to a reference position point of the newly searched positioning edge and continues positioning edge determination and error correction according to the abovementioned manners. Through the method of the embodiment, the positioning edge may be searched and determined effectively and accurately, thereby providing accurate reference data for error correction.

As one implementation mode, before the operation in S4 that whether the path of continuing along-edge walking is the along-edge path that the autonomous mobile robot has walked along or not is determined after the autonomous mobile robot returns to the along-edge breakpoint, the following steps are further included: S41: whether the autonomous mobile robot meets a positioning correction condition or not is determined, when the autonomous mobile robot meets the positioning correction condition, S42 is entered, when the autonomous mobile robot does not meet the positioning correction condition, S4 that whether the path of continuing along-edge walking is the along-edge path that the autonomous mobile robot has walked along or not is determined is entered; S42: two positioning edges with an intersection are searched, and the intersection is determined as a reference position point; S43: the autonomous mobile robot walks to the reference position point; S44: whether an obstacle is detected in a preset range of the reference position point or not is determined, when the obstacle is detected, the autonomous mobile robot walks along an edge of the obstacle in the along-edge direction and S45 is entered, and when the obstacle is not detected, an intersection of other two positioning edges is determined as a reference position point and S43 is re-executed; and S45: whether an angle direction of walking along the edge of the obstacle is in an error range of an angle direction of the positioning edge or not is determined, when the angle direction is in the error range, the autonomous mobile robot returns to the along-edge breakpoint and S4 that whether the path of continuing along-edge walking is the along-edge path that the autonomous mobile robot has walked along or not is determined is entered, and when the angle direction is not in the error range, the position and orientation of the autonomous mobile robot during walking to the intersection are corrected to a position and orientation corresponding to the reference position point and S4 that whether the path of continuing along-edge walking is the along-edge path that the autonomous mobile robot has walked along or not is determined is entered. The method of the embodiment is similar to the method of the previous embodiment and specific implementation steps will not be elaborated. The difference is that an intersection of two positioning edges is determined as a reference position point in the embodiment, and in the previous embodiment, any point in a positioning edge is determined as a reference position point. In an optional embodiment, the intersection of two positioning edges is adopted as a reference position point, so that a positioning effect is more remarkable, and the error correction result is more accurate.

As one implementation mode, the operation in S41 that whether the autonomous mobile robot meets the positioning correction condition or not is determined includes the following steps: S411: whether an along-edge walking time period of the autonomous mobile robot reaches a preset time period or not is determined, when the along-edge walking time period reaches the preset time period, it is determined that the autonomous mobile robot meets the positioning correction condition, and when the along-edge walking time period does not reach the preset time period, S412 is entered; and S412: whether an along-edge walking path of the autonomous mobile robot reaches a sixth preset length or not is determined, when the along-edge walking path reaches the sixth preset length, it is determined that the autonomous mobile robot meets the positioning correction condition, and when the along-edge walking path does not reach the sixth preset length, it is determined that the autonomous mobile robot does not meet the positioning correction condition. According to the method of the embodiment, whether error correction is required or not is determined by combining the along-edge walking time periodand the length of the along-edge walking path, so that whether the accumulated walking error of the autonomous mobile robot reaches a degree requiring correction or not may be determined more accurately. When the along-edge walking time period of the autonomous mobile robot reaches the preset time period, it may directly be determined that the autonomous mobile robot meets the positioning correction condition. This is because reaching the preset time period indicates that the autonomous mobile robot has walked for a long time, the accumulated walking error has been relatively great and error correction may be performed. The preset time period may be set according to the specific design requirement, is optionally set in a range of ten minutes to twenty minutes, and may be set to be fifteen minutes in the embodiment. When the along-edge walking time periodof the autonomous mobile robot does not reach the preset time period but the along-edge walking path has reached the sixth preset length, it may also be indicated that the walking distance of the autonomous mobile robot is relatively long, the accumulated walking error is relatively great and error correction may be performed. This condition is applied to the circumstance that an along-edge walking process of the autonomous mobile robot is relatively smooth or the autonomous mobile robot skids less during along-edge walking. In such case, the autonomous mobile robot may walk along the edge by a long distance within a relatively short time. The sixth preset length may also be set according to the specific design requirement, is optionally set in a range of ten meters to twenty meters, and is set to be fifteen meters in the embodiment.

In the abovementioned embodiments, the horizontal direction, the horizontal line, the vertical direction and the vertical line are described based on the two-dimensional planar structure shown in the drawing. For example, from Fig. 2, the straight line p1p2 is a horizontal line, and an extension direction of the straight line p1p2 is the horizontal direction; and the straight line p2p3 is a vertical line, and an extension direction of the straight line p2p3 is the vertical direction. The along-edge direction is also preset, may be set to be a clockwise along-edge direction and may also be set to be a counterclockwise along-edge direction. After the along-edge direction is set, the autonomous mobile robot walks in a unified manner according to the set clockwise or counterclockwise direction no matter whether the autonomous mobile robot walks along an edge of an isolated object or along the wall edge or the edge of the object against the wall.

The autonomous mobile robot, when moving, simultaneously walks and cleans, so that the description in these embodiments that the autonomous mobile robot walks on a certain path or in a certain region indicates that the autonomous mobile robot walks and cleans along the path and the description that the autonomous mobile robot walks to cover a certain region indicates that the autonomous mobile robot cleans the region. In addition, the autonomous mobile robot may also define different attributes for the same position point, and these attributes coexist. For example, the point A is defined as a starting position point of a first along-edge path, and meanwhile, the point A may also be defined as an along-edge breakpoint of a last along-edge path.

It is apparent that the abovementioned embodiments are not all embodiments but part of embodiments of the present invention, and the technical solutions of each embodiment may be combined. In addition, directional or positional relationships indicated by terms "central", "above", "below", "left", "right", "vertical", "inside", "outside" and the like appearing in the embodiments are directional or positional relationships shown in the drawings, are adopted not to indicate or imply that involved devices or elements are required to have specific orientations or be structured and operated with the specific orientations but to conveniently and simply describe the present invention and thus should not be understood as limits to the present invention. Terms "first", "second" and "third", etc. in the embodiments are adopted to conveniently distinguish related features and may not be understood to indicate or imply relative importance, a sequence or the number of technical features.

It can be understood by those of ordinary skill in the art that all or part of steps implementing each method embodiment may be completed through related hardware instructed by a program. The program may be stored in a computer-readable storage medium (for example, various media capable of storing a program code such as a Read-Only Memory (ROM), a Random Access Memory (RAM), a magnetic disk or an optical disk). The program is executed to execute the steps of each method embodiment.

## Claims

1. An along-edge walking control method for an autonomous mobile robot, wherein the method comprises the following steps:
S1: performing an along-edge walking and acquiring an along-edge path (AB, BD, EG, EH, HA) of the autonomous mobile robot, the along-edge path is a path that the autonomous mobile robot has walked along a wall edge (AB, CD, 7) or an edge of an object against a wall, and entering S2;
S2: determining whether the along-edge path of the autonomous mobile robot meets a first preset condition or not, when determining that the along-edge path meets the first preset condition, entering S3, and when determining that the along-edge path does not meet the first preset condition, re-executing S1;
S3: setting a walking region (a, b, c, d) based on the along-edge path by taking a current position point as an along-edge breakpoint, and entering S4, wherein, a manner for setting the walking region is a dynamic adjustment setting manner, after the walking region is set in a dynamic adjustment setting manner, when setting a next walking region, based on boundaries of a previous walking region and a shape of a current along-edge path, the previous walking region is adaptively adjusted so that the next walking region shares an edge with the previous walking region;
S4: controlling the autonomous mobile robot to return to the along-edge breakpoint after covering the walking region in a preset walking manner, determining whether the along-edge breakpoint is a starting position point of the along-edge path at a beginning of along-edge walking, when determining that the along-edge breakpoint is not the starting position point of the along-edge path at the beginning of along-edge walking, re-executing S1, and when determining that the along-edge breakpoint is the starting position point of the along-edge path at the beginning of along-edge walking , entering S5; and
S5: the autonomous mobile robot ends its along-edge walking; **characterised in that** the method further comprises the following steps:
before executing S1 for the first time, executing S01: determining whether an along-edge sensor on a side edge of a body of the autonomous mobile robot detects any obstacle or not, when the along-edge sensor detects the obstacle, directly entering S02, when the along-edge sensor does not detect the obstacle, controlling the autonomous mobile robot to walk straight ahead until an obstacle sensor at a front end of the body detects an obstacle, adjusting a walking direction of the autonomous mobile robot to enable the along-edge sensor to detect the obstacle, and then entering S02;
S02: controlling the autonomous mobile robot to walk along an edge of the obstacle according to a distance, detected by the along-edge sensor, between the body and the obstacle, and keeping the distance between the body and the obstacle a first preset distance, and entering S03;
S03: determining whether a length of the along-edge path that the autonomous mobile robot currently walked is shorter than a first preset length or not and whether a turning angle of the autonomous mobile robot during the along-edge path is larger than a first preset angle or not, when the current along-edge walking path is shorter than the first preset length and the turning angle is larger than the first preset angle, determining that the autonomous mobile robot does not walk along the wall edge or the edge of the object against the wall and S04 is entered, and when the current along-edge walking path is not shorter than the first preset length and/or the turning angle is not larger than the first preset angle, determining that the autonomous mobile robot walks along the wall edge or the edge of the object against the wall and entering S1, the first preset length set according to a specific design requirement, wherein, the first preset angle is 270°, and the current along-edge walking path is the path of controlling the autonomous mobile robot to walk along the edge of the obstacle in S02; and
S04: controlling the autonomous mobile robot to turn a second preset angle and walk straight ahead until the obstacle sensor at the front end of the body detects an obstacle, adjusting the walking direction of the autonomous mobile robot to enable the along-side sensor to detect the obstacle and then entering S02.
wherein determining whether the along-edge path of the autonomous mobile robot walking along the wall edge or the edge of the object against the wall meets the first preset condition or not in S2 comprises the following steps:
S21: establishing a XY-axis coordinate system by taking a starting position point of the along-edge path as an origin, wherein, an X-axis direction of the XY-axis coordinate system is horizontal direction, and a Y-axis direction of the XY-axis coordinate system is vertical direction, and the starting position point of the along-edge path is a position point where the autonomous mobile robot starts along-edge walking;
S22: determining whether a horizontal length of the along-edge path of the autonomous mobile robot walking along the wall edge or the edge of the object against the wall in a X-axis direction is equal to a second preset length or not, or determining whether a vertical length of the along-edge path of the autonomous mobile robot walking along the wall edge or the edge of the object against the wall in a Y-axis direction is equal to a third preset length or not, when the horizontal length is equal to the second preset length, or the vertical length is equal to the third preset length, or the horizontal length is equal to the second preset length and the vertical length is equal to the third preset length, entering S23, when the horizontal length is not equal to the second preset length and the vertical length is not equal to the third preset length, determining that the along-edge path of the autonomous mobile robot walking along the wall edge or the edge of the object against the wall does not meet the first preset condition; and
S23: determining whether the along-edge path comprises at least one positioning edge extending in a linear direction or not, when the along-edge path comprises the positioning edge, determining that the along-edge path of the autonomous mobile robot walking along the wall edge or the edge of the object against the wall meets the first preset condition, when the along-edge path does not comprise the positioning edge, controlling the autonomous mobile robot to continue walking along the wall edge or the edge of the object against the wall until the along-edge path comprises the positioning edge extending in the linear direction and determining that the along-edge path of the autonomous mobile robot walking along the wall edge or the edge of the object against the wall meets the first preset condition, the positioning edge is determined by the autonomous mobile robot based on an angle change detected by a gyroscope at a same time of the along-edge walking, wherein, after S1 and before S2, further comprising the following steps:
S11: determining a walking path along which the autonomous mobile robot keeps walking along the same direction range by a distance longer than a third preset distance as a straight path (AN) according to a position and orientation of the autonomous mobile robot walking along the wall edge or the edge of the object against the wall;
S12: recording a direction vertical to the straight path and pointing to a direction of an inner side of the straight path as a calibration direction; and
S13: determining the straight path recording position and orientation information and the calibration direction as a positioning edge,
wherein setting the walking region based on the along-edge path by taking the current position point as the along-edge breakpoint in S3 comprises the following steps:
S311: determining a current position point as an along-edge breakpoint;
S312: determining two position points at a longest distance in the X-axis direction in the along-edge path as first reference points, constructing reference vertical lines passing the first reference points in the Y-axis direction, determining two position points at a longest distance in the Y-axis direction in the along-edge path as second reference points, and constructing reference horizontal lines passing the second reference points in the X-axis direction;
S313: determining whether a vertical distance between the two reference vertical lines is equal to the second preset length or not, when the vertical distance is equal to the second preset length, determining the reference vertical lines as vertical boundary lines and entering S314, when the vertical distance is not equal to the second preset length, determining the reference horizontal lines as horizontal boundary lines and entering S315;
S314: determining whether a vertical distance between the two reference horizontal lines is equal to the third preset length or not, when the vertical distance is equal to the third preset length, determining the two reference horizontal lines as the horizontal boundary lines, and when the vertical distance is not equal to the third preset length, determining a reference horizontal line on an outer side of the along-edge path as one horizontal boundary line, determining a horizontal line which is on an inner side of the along-edge path and parallel to the reference horizontal line and of which a vertical distance with the reference horizontal line on the outer side of the along-edge path is equal to the third preset length as the other horizontal boundary line and determining a region enclosed by the along-edge path and the vertical boundary line and horizontal boundary line on the inner side of the along-edge path as the walking region; and
S315: determining whether the vertical distance between the two reference vertical lines is equal to the second preset length or not, when the vertical distance is equal to the second preset length, determining the two reference vertical lines as the vertical boundary lines, and when the vertical distance is not equal to the second preset length, determining the reference vertical line on the outer side of the along-edge path as one vertical boundary line, determining a vertical line which is on the inner side of the along-edge path and parallel to the reference vertical line and of which a vertical distance with the reference vertical line on the outer side of the along-edge path is equal to the second preset length as the other vertical boundary line and determining a region enclosed by the along-edge path and the vertical boundary line and horizontal boundary line on the inner side of the along-edge path as the walking region.

2. The method as claimed in claim 1, **characterized in that** setting the walking region based on the along-edge path by taking the current position point as the along-edge breakpoint in S3 comprises the following steps:
S321: determining a current position point as an along-edge breakpoint;
S322: determining two position points at a longest distance in the X-axis direction in the along-edge path as first reference points, constructing reference vertical lines passing the first reference points in the Y-axis direction, determining two position points at a longest distance in the Y-axis direction in the along-edge path as second reference points, and constructing reference horizontal lines passing the second reference points in the X-axis direction;
S323: determining whether a vertical distance between the two reference vertical lines is equal to the second preset length or not, when the vertical distance is equal to the second preset length, determining the reference vertical lines as vertical boundary lines and entering S324, when the vertical distance is not equal to the second preset length, determining the reference horizontal lines as horizontal boundary lines and entering S325;
S324: determining whether a vertical distance between the two reference horizontal lines is equal to the third preset length or not, when the vertical distance is equal to the third preset length, determining the two reference horizontal lines as the horizontal boundary lines, and when the vertical distance is not equal to the third preset length, determining the reference horizontal line on an outer side of the along-edge path as one horizontal boundary line, determining a horizontal line which is on an inner side of the along-edge path and parallel to the reference horizontal line and of which a vertical distance with the reference horizontal line on the outer side of the along-edge path is equal to the third preset length as the other horizontal boundary line, determining a region enclosed by the along-edge path and the vertical boundary line and horizontal boundary line on the inner side of the along-edge path as a planned walking region and entering S326;
S325: determining whether the vertical distance between the two reference vertical lines is equal to the second preset length or not, when the vertical distance is equal to the second preset length, determining the two reference vertical lines as the vertical boundary lines, and when the vertical distance is not equal to the second preset length, determining the reference vertical line on the outer side of the along-edge path as one vertical boundary line, determining a vertical line which is on the inner side of the along-edge path and parallel to the reference vertical line and of which a vertical distance with the reference vertical line on the outer side of the along-edge path is equal to the second preset length as the other vertical boundary line, determining a region enclosed by the along-edge path and the vertical boundary line and horizontal boundary line on the inner side of the along-edge path as the planned walking region and entering S326;
S326: determining whether an overlapping area between the planned walking region and a walking region previously determined is larger than a preset proportion value of an area of the planned walking region or not, when the overlapping area is larger than the preset proportion value of the area, entering S327, and when the overlapping area is not larger than the preset proportion value of the area, determining a region left after a region of the overlapping area is subtracted from the planned walking region as the walking region and entering S4;
S327: canceling the along-edge breakpoint currently determined, and controlling the autonomous mobile robot to continue walking along the wall edge or the edge of the object against the wall until an along-edge path of walking along the wall edge or the edge of the object against the wall meets a second preset condition;
S328: determining a current position point as an along-edge breakpoint;
S329: determining two position points at a longest distance in the X-axis direction in the along-edge path between the current along-edge breakpoint and the previous along-edge breakpoint as first reference points, constructing reference vertical lines passing the first reference points in the Y-axis direction, determining two position points at a longest distance in the Y-axis direction in the along-edge path as second reference points, constructing reference horizontal lines passing the second reference points in the X-axis direction, determining whether a vertical distance between the two reference vertical lines is equal to a fourth preset length or not, when the vertical distance is equal to the fourth preset length, determining the reference vertical lines as vertical boundary lines and entering S330, when the vertical distance is not equal to the fourth preset length, determining the reference horizontal lines as horizontal boundary lines and entering S331;
S330: determining whether a vertical distance between the two reference horizontal lines is equal to a fifth preset length or not, when the vertical distance is equal to the fifth preset length, determining the two reference horizontal lines as the horizontal boundary lines, and when the vertical distance is not equal to the fifth preset length, determining the reference horizontal line on the outer side of the along-edge path as one horizontal boundary line, determining a horizontal line which is on the inner side of the along-edge path and parallel to the reference horizontal line and of which a vertical distance with the reference horizontal line on the outer side of the along-edge path is equal to the fifth preset length as the other horizontal boundary line, and determining a region left after a region of the overlapping area is subtracted from a region enclosed by the along-edge path and the vertical boundary line and horizontal boundary line on the inner side of the along-edge path as the walking region;
S331: determining whether the vertical distance between the two reference vertical lines is equal to the fourth preset length or not, when the vertical distance is equal to the fourth preset length, determining the two reference vertical lines as the vertical boundary lines, and when the vertical distance is not equal to the fourth preset length, determining the reference vertical line on the outer side of the along-edge path as one vertical boundary line, determining a vertical line which is on the inner side of the along-edge path and parallel to the reference vertical line and of which a vertical distance with the reference vertical line on the outer side of the along-edge path is equal to the fourth preset length as the other vertical boundary line, and determining a region left after a region of the overlapping area is subtracted from a region enclosed by the along-edge path and the vertical boundary line and horizontal boundary line on the inner side of the along-edge path as the walking region.

3. The method as claimed in claim 2, **characterized in that** controlling the autonomous mobile robot to walk until the along-edge path of walking along the wall edge or the edge of the object against the wall meets the second preset condition in S327 comprises the following steps:
S3271: establishing an XY-axis coordinate system by taking a starting position point of the along-edge path as an origin; and
S3272: determining whether a horizontal length of the along-edge path of the autonomous mobile robot walking along the wall edge or the edge of the object against the wall in the X-axis direction is equal to the fourth preset length or not, or determining whether a vertical length of the along-edge path of the autonomous mobile robot walking along the wall edge or the edge of the object against the wall in the Y-axis direction is equal to the fifth preset length or not, when the horizontal length is equal to the fourth preset length or the vertical length is equal to the fifth preset length, determining that the along-edge path of the autonomous mobile robot walking along the wall edge or the edge of the object against the wall meets the second preset condition, when the horizontal length is not equal to the fourth preset length and the vertical length is not equal to the fifth preset length, determining that the along-edge path of the autonomous mobile robot walking along the wall edge or the edge of the object against the wall does not meet the second preset condition.

4. The method as claimed in claim 1, **characterized in that** before determining whether the path of continuing along-edge walking is the along-edge path that the autonomous mobile robot has walked along or not after the autonomous mobile robot returns to the along-edge breakpoint in S4, the method further comprises the following steps:
S41: determining whether the autonomous mobile robot meets a positioning correction condition or not, when the autonomous mobile robot meets the positioning correction condition, entering S42, when the autonomous mobile robot does not meet the positioning correction condition, entering S4 of determining whether the path of continuing along-edge walking is the along-edge path that the autonomous mobile robot has walked along or not;
S42: searching one reference position point in a positioning edge first determined;
S43: walking to the reference position point;
S44: determining whether an obstacle is detected in a preset range of the reference position point or not, when the obstacle is detected, walking along an edge of the obstacle in an along-edge direction and entering S45, and when the obstacle is not detected, determining a reference position point in another adjacent positioning edge and re-executing S43; and
S45: determining whether an angle direction of walking along the edge of the obstacle is in an error range of an angle direction of the positioning edge or not, when the angle direction is in the error range, correcting the position and orientation of the autonomous mobile robot to a position and orientation corresponding to the positioning edge and entering S4 of determining whether the path of continuing along-edge walking is the along-edge path that the autonomous mobile robot has walked along or not, and when the angle direction is not in the error range, determining a reference position point in another adjacent positioning edge and re-executing S43.

5. The method as claimed in claim 1, **characterized in that** before determining whether the path of continuing along-edge walking is the along-edge path that the autonomous mobile robot has walked along or not after the autonomous mobile robot returns to the along-edge breakpoint in S4, the method further comprises the following steps:
S41: determining whether the autonomous mobile robot meets a positioning correction condition or not, when the autonomous mobile robot meets the positioning correction condition, entering S42, when the autonomous mobile robot does not meet the positioning correction condition, entering S4 of determining whether the path of continuing along-edge walking is the along-edge path that the autonomous mobile robot has walked along or not;
S42: searching two positioning edges with an intersection, and determining the intersection as a reference position point;
S43: walking to the reference position point;
S44: determining whether an obstacle is detected in a preset range of the reference position point or not, when the obstacle is detected, walking along an edge of the obstacle in the along-edge direction and entering S45, and when the obstacle is not detected, determining an intersection of other two positioning edges as a reference position point and re-executing S43; and
S45: determining whether an angle direction of walking along the edge of the obstacle is in an error range of an angle direction of the positioning edge or not, when the angle direction is in the error range, returning to the along-edge breakpoint and entering S4 of determining whether the path of continuing along-edge walking is the along-edge path that the autonomous mobile robot has walked along or not, and when the angle direction is not in the error range, correcting the position and orientation of the autonomous mobile robot during walking to the intersection to a position and orientation corresponding to the reference position point and entering S4 of determining whether the path of continuing along-edge walking is the along-edge path that the autonomous mobile robot has walked along or not.

6. The method as claimed in claim 4 or 5, **characterized in that** determining whether the autonomous mobile robot meets the positioning correction condition or not in S41 comprises the following steps:
S411: determining whether an along-edge walking time period of the autonomous mobile robot reaches a preset time period or not, when the along-edge walking time period reaches the preset time period, determining that the autonomous mobile robot meets the positioning correction condition, and when the along-edge walking time period does not reach the preset time period, entering S412; and
S412: determining whether an along-edge walking path of the autonomous mobile robot reaches a sixth preset length or not, when the along-edge walking path reaches the sixth preset length, determining that the autonomous mobile robot meets the positioning correction condition, and when the along-edge walking path does not reach the sixth preset length, determining that the autonomous mobile robot does not meet the positioning correction condition.

## Patentansprüche

1. Verfahren zur Steuerung eines autonomen mobilen Roboters zum Gehen entlang einer Kante, wobei das Verfahren die folgenden Schritte umfasst:
S1: Durchführen eines Gehens entlang einer Kante und Erfassen eines Weges entlang einer Kante (AB, BD, EG, EH, HA) des autonomen mobilen Roboters, wobei der Weg entlang einer Kante ein Weg ist, den der autonome mobile Roboter entlang einer Wandkante (AB, CD, 7) oder einer Kante eines Objekts an einer Wand gegangen ist, und Eintreten in S2;
S2: Bestimmen, ob der Weg entlang einer Kante des autonomen mobilen Roboters eine erste zuvor festgelegte Bedingung erfüllt oder nicht, wenn bestimmt wird, dass der Weg entlang einer Kante die erste zuvor festgelegte Bedingung erfüllt, Eintreten in S3, und wenn bestimmt wird, dass der Weg entlang einer Kante die erste zuvor festgelegte Bedingung nicht erfüllt, erneutes Ausführen von S1,
S3: Festlegen eines Gehbereichs (a, b, c, d) basierend auf dem Weg entlang einer Kante, indem ein aktueller Positionspunkt als Haltepunkt entlang einer Kante genommen wird, und Eintreten in S4, wobei eine Art und Weise zum Festlegen des Gehbereichs eine dynamische Einstellungsfestlegungsweise ist, wobei, nachdem der Gehbereich auf eine dynamische Einstellungsfestlegungsweise festgelegt ist, wenn ein nächster Gehbereich festgelegt wird, basierend auf Grenzen eines vorherigen Gehbereichs und einer Form eines aktuellen Weges entlang einer Kante, der vorherige Gehbereich adaptiv angepasst wird, sodass der nächste Gehbereich eine Kante mit dem vorherigen Gehbereich teilt;
S4: Steuern des autonomen mobilen Roboters, um zu dem Haltepunkt entlang einer Kante zurückzukehren, nachdem der Gehbereich in einer zuvor festgelegten Gehweise abgedeckt ist, Bestimmen, ob der Haltepunkt entlang einer Kante ein Startpositionspunkt des Weges entlang einer Kante an einem Anfang des Gehens entlang einer Kante ist, wenn bestimmt wird, dass der Haltepunkt entlang einer Kante nicht der Startpositionspunkt des Weges entlang einer Kante an dem Anfang des Gehens entlang einer Kante ist, erneutes Ausführen von S1 und wenn bestimmt wird, dass der Haltepunkt entlang einer Kante der Startpositionspunkt des Weges entlang einer Kante an dem Anfang des Gehens entlang einer Kante ist, Eintreten in S5; und
S5: der autonome mobile Roboter beendet sein Gehen entlang einer Kante;
**dadurch gekennzeichnet, dass** das Verfahren ferner die folgenden Schritte umfasst:
vor dem ersten Ausführen von S1, Ausführen von S01: Bestimmen, ob ein Sensor entlang einer Kante an einer Seitenkante eines Körpers des autonomen mobilen Roboters ein beliebiges Hindernis detektiert oder nicht, wenn der Sensor entlang einer Kante das Hindernis detektiert, direktes Eintreten in S02, wenn der Sensor entlang einer Kante das Hindernis nicht detektiert, Steuern des autonomen mobilen Roboters, sodass er geradeaus geht, bis ein Hindernissensor an einem vorderen Ende des Körpers ein Hindernis detektiert, Anpassen einer Gehrichtung des autonomen mobilen Roboters, um dem Sensor entlang einer Kante zu ermöglichen, das Hindernis zu detektieren, und dann Eintreten in S02;
S02: Steuern des autonomen mobilen Roboters, um entlang einer Kante des Hindernisses gemäß einem Abstand zu gehen, detektiert durch den Sensor entlang einer Kante, zwischen dem Körper und dem Hindernis, und Halten des Abstands zwischen dem Körper und dem Hindernis bei einem ersten zuvor festgelegten Abstand, und Eintreten in S03;
S03: Bestimmen, ob eine Länge des Weges entlang einer Kante, den der autonome mobile Roboter aktuell gegangen ist, kürzer als eine erste zuvor festgelegte Länge ist oder nicht, und ob ein Drehwinkel des autonomen mobilen Roboters während des Weges entlang einer Kante größer als ein erster zuvor festgelegter Winkel ist oder nicht, wenn der aktuelle Gehweg entlang einer Kante kürzer als die erste zuvor festgelegte Länge ist und der Drehwinkel größer als der erste zuvor festgelegte Winkel ist, Bestimmen, dass der autonome mobile Roboter nicht entlang der Wandkante oder der Kante des Objekts an der Wand geht und Eintreten in S04, und wenn der aktuelle Gehweg entlang einer Kante nicht kürzer als die erste zuvor festgelegte Länge ist und/oder der Drehwinkel nicht größer als der erste zuvor festgelegte Winkel ist, Bestimmen, dass der autonome mobile Roboter entlang der Wandkante oder der Kante des Objekts an der Wand geht und Eintreten in S1, wobei die erste zuvor festgelegte Länge gemäß einer spezifischen Designanforderung festgelegt ist, wobei der erste zuvor festgelegte Winkel 270° ist und der aktuelle Gehweg entlang einer Kante der Weg zum Steuern des autonomen mobilen Roboters ist, sodass er entlang der Kante des Hindernisses in S02 geht; und
S04: Steuern des autonomen mobilen Roboters, um einen zweiten zuvor festgelegten Winkel zu drehen und geradeaus zu gehen, bis der Hindernissensor an dem vorderen Ende des Körpers ein Hindernis detektiert, Einstellen der Gehrichtung des autonomen mobilen Roboters, um dem Sensor entlang einer Seite zu ermöglichen, das Hindernis zu detektieren, und dann Eintreten in S02,
wobei das Bestimmen, ob der Weg entlang einer Kante des autonomen mobilen Roboters, der entlang der Wandkante oder der Kante des Objekts an der Wand geht, die erste zuvor festgelegte Bedingung in S2 erfüllt oder nicht, die folgenden Schritte umfasst:
S21: Erstellen eines XY-Achsen-Koordinatensystems durch Nehmen eines Startpositionspunktes des Weges entlang einer Kante als Ursprung, wobei eine X-Achsenrichtung des XY-Achsen-Koordinatensystems horizontale Richtung ist und eine Y-Achsenrichtung des XY-Achsen-Koordinatensystems vertikale Richtung ist, und der Startpositionspunkt des Weges entlang einer Kante ein Positionspunkt ist, an dem der autonome mobile Roboter mit dem Gehen entlang einer Kante beginnt;
S22: Bestimmen, ob eine horizontale Länge des Weges entlang einer Kante des autonomen mobilen Roboters, der entlang der Wandkante oder der Kante des Objekts an der Wand in einer X-Achsen-Richtung geht, gleich einer zweiten zuvor festgelegten Länge ist oder nicht, oder Bestimmen ob eine vertikale Länge des Weges entlang einer Kante des autonomen mobilen Roboters, der entlang der Wandkante oder der Kante des Objekts an der Wand in einer Y-Achsenrichtung geht, gleich einer dritten zuvor festgelegten Länge ist oder nicht, wenn die horizontale Länge gleich der zweiten zuvor festgelegten Länge ist, oder die vertikale Länge gleich der dritten zuvor festgelegten Länge ist, oder die horizontale Länge gleich der zweiten zuvor festgelegten Länge ist und die vertikale Länge gleich der dritten zuvor festgelegten Länge ist, Eintreten in S23, wenn die horizontale Länge nicht gleich der zweiten zuvor festgelegten Länge ist und die vertikale Länge nicht gleich der dritten zuvor festgelegten Länge ist, Bestimmen, dass der Weg entlang einer Kante des autonomen mobilen Roboters, der entlang der Wandkante oder der Kante des Objekts an der Wand geht, die erste zuvor festgelegte Bedingung nicht erfüllt; und
S23: Bestimmen, ob der Weg entlang einer Kante zumindest eine Positionierungskante umfasst, die sich in einer linearen Richtung erstreckt, oder nicht, wenn der Weg entlang einer Kante die Positionierungskante umfasst, Bestimmen, dass der Weg entlang einer Kante des autonomen mobilen Roboters, der entlang der Wandkante oder der Kante des Objekts an der Wand geht, die erste zuvor festgelegte Bedingung erfüllt, wenn der Weg entlang einer Kante die Positionierungskante nicht umfasst, Steuern des autonomen mobilen Roboters, sodass er weiter entlang der Wandkante oder der Kante des Objekts an der Wand geht, bis der Weg entlang einer Kante die Positionierungskante umfasst, die sich in der linearen Richtung erstreckt, und Bestimmen, dass der Weg entlang einer Kante des autonomen mobilen Roboters, der entlang der Wandkante oder der Kante des Objekts an der Wand geht, die erste zuvor festgelegte Bedingung erfüllt, wobei die Positionierungskante durch den autonomen mobilen Roboter basierend auf einer Winkeländerung bestimmt wird, die durch ein Gyroskop zu einer gleichen Zeit des Gehens entlang einer Kante detektiert wird, wobei es nach S1 und vor S2 ferner die folgenden Schritte umfasst:
S11: Bestimmen eines Gehweges, entlang dem der autonome mobile Roboter entlang des gleichen Richtungsbereichs um einen Abstand weiter geht, der länger als ein dritter zuvor festgelegter Abstand ist, als gerader Weg (AN) gemäß einer Position und Ausrichtung des autonomen mobilen Roboters, der entlang der Wandkante oder der Kante des Objekts an der Wand geht;
S12: Aufzeichnen einer Richtung vertikal zu dem geraden Weg und Zeigen auf eine Richtung einer Innenseite des geraden Weges als Kalibrierungsrichtung; und
S13: Bestimmen der Aufzeichnungs- und Ausrichtungsinformationen des geraden Weges und der Kalibrierungsrichtung als Positionierungskante,
wobei das Festlegen des Gehbereichs basierend auf dem Weg entlang einer Kante durch Nehmen des aktuellen Positionspunktes als Haltepunkt entlang einer Kante in S3 die folgenden Schritte umfasst:
S311: Bestimmen eines aktuellen Positionspunktes als Haltepunkt entlang einer Kante;
S312: Bestimmen von zwei Positionspunkten an einem längsten Abstand in der X-Achsen-Richtung in dem Weg entlang einer Kante als erste Referenzpunkte, Konstruieren von vertikalen Referenzlinien, die durch die ersten Referenzpunkte in der Y-Achsen-Richtung verlaufen, Bestimmen von zwei Positionspunkten an einem längsten Abstand in der Y-Achsen-Richtung in dem Weg entlang einer Kante als zweite Referenzpunkte, und Konstruieren von horizontalen Referenzlinien, die durch die zweiten Referenzpunkte in der X-Achsen-Richtung verlaufen;
S313: Bestimmen, ob ein vertikaler Abstand zwischen den zwei vertikalen Referenzlinien gleich der zweiten zuvor festgelegten Länge ist oder nicht, wenn der vertikale Abstand gleich der zweiten zuvor festgelegten Länge ist, Bestimmen der vertikalen Referenzlinien als vertikale Grenzlinien und Eintreten in S314, wenn der vertikale Abstand nicht gleich der zweiten zuvor festgelegten Länge ist, Bestimmen der horizontalen Referenzlinien als horizontale Grenzlinien und Eintreten in S315;
S314: Bestimmen, ob ein vertikaler Abstand zwischen den zwei horizontalen Referenzlinien gleich der dritten zuvor festgelegten Länge ist oder nicht, wenn der vertikale Abstand gleich der dritten zuvor festgelegten Länge ist, Bestimmen der zwei horizontalen Referenzlinien als horizontale Grenzlinien und wenn der vertikale Abstand nicht gleich der dritten zuvor festgelegten Länge ist, Bestimmen einer horizontalen Referenzlinie auf einer Außenseite des Weges entlang einer Kante als eine horizontale Grenzlinie, Bestimmen einer horizontalen Linie, die auf einer Innenseite des Weges entlang einer Kante und parallel zu der horizontalen Referenzlinie ist und von der ein vertikaler Abstand mit der horizontalen Referenzlinie auf der Außenseite des Weges entlang einer Kante gleich der dritten zuvor festgelegten Länge ist, als die andere horizontale Grenzlinie und Bestimmen eines Bereichs, der durch den Weg entlang einer Kante und die vertikale Grenzlinie und horizontale Grenzlinie auf der Innenseite des Weges entlang einer Kante umschlossen ist, als Gehbereich; und
S315: Bestimmen, ob der vertikale Abstand zwischen den zwei vertikalen Referenzlinien gleich der zweiten zuvor festgelegten Länge ist oder nicht, wenn der vertikale Abstand gleich der zweiten zuvor festgelegten Länge ist, Bestimmen der zwei vertikalen Referenzlinien als vertikale Grenzlinien und wenn der vertikale Abstand nicht gleich der zweiten zuvor festgelegten Länge ist, Bestimmen der vertikalen Referenzlinie auf der Außenseite des Weges entlang einer Kante als eine vertikale Grenzlinie, Bestimmen einer vertikalen Linie, die auf der Innenseite des Weges entlang einer Kante und parallel zu der vertikalen Referenzlinie ist und von der ein vertikaler Abstand mit der vertikalen Referenzlinie auf der Außenseite des Weges entlang einer Kante gleich der zweiten zuvor festgelegten Länge ist, als die andere vertikale Grenzlinie und Bestimmen eines Bereichs, der durch den Weg entlang einer Kante und die vertikale Grenzlinie und horizontale Grenzlinie auf der Innenseite des Weges entlang einer Kante umschlossen ist, als Gehbereich.

2. Verfahren nach Anspruch 1, **dadurch gekennzeichnet, dass** das Festlegen des Gehbereichs basierend auf dem Weg entlang einer Kante durch Nehmen des aktuellen Positionspunktes als Haltepunkt entlang einer Kante in S3 die folgenden Schritte umfasst:
S321: Bestimmen eines aktuellen Positionspunktes als Haltepunkt entlang einer Kante;
S322: Bestimmen von zwei Positionspunkten an einem längsten Abstand in der X-Achsen-Richtung in dem Weg entlang einer Kante als erste Referenzpunkte, Konstruieren von vertikalen Referenzlinien, die durch die ersten Referenzpunkte in der Y-Achsen-Richtung verlaufen, Bestimmen von zwei Positionspunkten an einem längsten Abstand in der Y-Achsen-Richtung in dem Weg entlang einer Kante als zweite Referenzpunkte, und Konstruieren von horizontalen Referenzlinien, die durch die zweiten Referenzpunkte in der X-Achsen-Richtung verlaufen;
S323: Bestimmen, ob ein vertikaler Abstand zwischen den zwei vertikalen Referenzlinien gleich der zweiten zuvor festgelegten Länge ist oder nicht, wenn der vertikale Abstand gleich der zweiten zuvor festgelegten Länge ist, Bestimmen der vertikalen Referenzlinien als vertikale Grenzlinien und Eintreten in S324, wenn der vertikale Abstand nicht gleich der zweiten zuvor festgelegten Länge ist, Bestimmen der horizontalen Referenzlinien als horizontale Grenzlinien und Eintreten in S325;
S324: Bestimmen, ob ein vertikaler Abstand zwischen den zwei horizontalen Referenzlinien gleich der dritten zuvor festgelegten Länge ist oder nicht, wenn der vertikale Abstand gleich der dritten zuvor festgelegten Länge ist, Bestimmen der zwei horizontalen Referenzlinien als horizontale Grenzlinien und wenn der vertikale Abstand nicht gleich der dritten zuvor festgelegten Länge ist, Bestimmen der horizontalen Referenzlinie auf einer Außenseite des Weges entlang einer Kante als eine horizontale Grenzlinie, Bestimmen einer horizontale Linie, die auf einer Innenseite des Weges entlang einer Kante und parallel zu der horizontalen Referenzlinie ist und von der ein vertikaler Abstand zu der horizontalen Referenzlinie auf der Außenseite des Weges entlang einer Kante gleich der dritten zuvor festgelegten Länge ist, als die andere horizontale Grenzlinie, Bestimmen eines Bereichs, der durch den Weg entlang einer Kante und die vertikale Grenzlinie und horizontale Grenzlinie auf der Innenseite des Weges entlang einer Kante umschlossen ist, als geplanten Gehbereich und Eintreten in S326;
S325: Bestimmen, ob der vertikale Abstand zwischen den zwei vertikalen Referenzlinien gleich der zweiten zuvor festgelegten Länge ist oder nicht, wenn der vertikale Abstand gleich der zweiten zuvor festgelegten Länge ist, Bestimmen der zwei vertikalen Referenzlinien als vertikale Grenzlinien und wenn der vertikale Abstand nicht gleich der zweiten zuvor festgelegten Länge ist, Bestimmen der vertikalen Referenzlinie auf der Außenseite des Weges entlang einer Kante als eine vertikale Grenzlinie, Bestimmen einer vertikalen Linie, die auf der Innenseite des Weges entlang einer Kante und parallel zu der vertikalen Referenzlinie ist und von der ein vertikaler Abstand mit der vertikalen Referenzlinie auf der Außenseite des Weges entlang einer Kante gleich der zweiten zuvor festgelegten Länge ist, als die andere vertikale Grenzlinie, Bestimmen eines Bereichs, der durch den Weg entlang einer Kante und die vertikale Grenzlinie und horizontale Grenzlinie auf der Innenseite des Weges entlang einer Kante umschlossen ist, als geplanter Gehbereich und Eintreten in S326;
S326: Bestimmen, ob ein Überlappungsbereich zwischen dem geplanten Gehbereich und einem zuvor bestimmten Gehbereich größer als ein zuvor festgelegter Anteilswert eines Bereichs des geplanten Gehbereichs ist oder nicht, wenn der Überlappungsbereich größer als der zuvor festgelegte Anteilswert des Bereichs ist, Eintreten in S327, und wenn der Überlappungsbereich nicht größer als der zuvor festgelegte Anteilswert des Bereichs ist, Bestimmen eines Bereichs, der übrig bleibt, nachdem ein Bereich des Überlappungsbereichs von dem geplanten Gehbereich abgezogen ist, als den Gehbereich und Eintreten in S4;
S327: Annullieren des aktuell bestimmten Haltepunktes entlang einer Kante und Steuern des autonomen mobilen Roboters, um weiter entlang der Wandkante oder der Kante des Objekts an der Wand zu gehen, bis ein Weg entlang einer Kante des Gehens entlang der Wandkante oder der Kante des Objekts an der Wand eine zweite zuvor festgelegte Bedingung erfüllt;
S328: Bestimmen eines aktuellen Positionspunktes als Haltepunkt entlang einer Kante;
S329: Bestimmen von zwei Positionspunkten an einem längsten Abstand in der X-Achsen-Richtung in dem Weg entlang einer Kante zwischen dem aktuellen Haltepunkt entlang einer Kante und dem vorherigen Haltepunkt entlang einer Kante als erste Referenzpunkte, Konstruieren von vertikalen Referenzlinien, die durch die ersten Referenzpunkte in der Y-Achsen-Richtung verlaufen, Bestimmen von zwei Positionspunkten an einem längsten Abstand in der Y-Achsen-Richtung in dem Weg entlang einer Kante als zweite Referenzpunkte, Konstruieren von horizontalen Referenzlinien, die durch die zweiten Referenzpunkte in der X-Achsen-Richtung verlaufen, Bestimmen, ob ein vertikaler Abstand zwischen den zwei vertikalen Referenzlinien gleich einer vierten zuvor festgelegten Länge ist oder nicht, wenn der vertikale Abstand gleich der vierten zuvor festgelegten Länge ist, Bestimmen der vertikalen Referenzlinien als vertikale Grenzlinien und Eintreten in S330, wenn der vertikale Abstand nicht gleich der vierten zuvor festgelegten Länge ist, Bestimmen der horizontalen Referenzlinien als horizontale Grenzlinien und Eintreten in S331;
S330: Bestimmen, ob ein vertikaler Abstand zwischen den zwei horizontalen Referenzlinien gleich einer fünften zuvor festgelegten Länge ist oder nicht, wenn der vertikale Abstand gleich der fünften zuvor festgelegten Länge ist, Bestimmen der zwei horizontalen Referenzlinien als horizontale Grenzlinien und wenn der vertikale Abstand nicht gleich der fünften zuvor festgelegten Länge ist, Bestimmen der horizontalen Referenzlinie auf der Außenseite des Weges entlang einer Kante als eine horizontale Grenzlinie, Bestimmen einer horizontalen Linie, die auf der Innenseite des Weges entlang einer Kante und parallel zu der horizontalen Referenzlinie ist und von der ein vertikaler Abstand mit der horizontalen Referenzlinie auf der Außenseite des Weges entlang einer Kante gleich der fünften zuvor festgelegten Länge ist, als die andere horizontale Grenzlinie, und Bestimmen eines Bereichs, der übrig ist, nachdem ein Bereich des Überlappungsbereichs von einem Bereich abgezogen ist, der durch den Weg entlang einer Kante und die vertikale Grenzlinie und horizontale Grenzlinie auf der Innenseite des Weges entlang einer Kante umschlossen ist, als Gehbereich;
S331: Bestimmen, ob der vertikale Abstand zwischen den zwei vertikalen Referenzlinien gleich der vierten zuvor festgelegten Länge ist oder nicht, wenn der vertikale Abstand gleich der vierten zuvor festgelegten Länge ist, Bestimmen der zwei vertikalen Referenzlinien als vertikale Grenzlinien, und wenn der vertikale Abstand nicht gleich der vierten zuvor festgelegten Länge ist, Bestimmen der vertikalen Referenzlinie auf der Außenseite des Weges entlang einer Kante als eine vertikale Grenzlinie, Bestimmen einer vertikalen Linie, die auf der Innenseite des Weges entlang einer Kante und parallel zu der vertikalen Referenzlinie ist und von der ein vertikaler Abstand mit der vertikalen Referenzlinie auf der Außenseite des Weges entlang einer Kante gleich der vierten zuvor festgelegten Länge ist, als die andere vertikale Grenzlinie, und Bestimmen eines Bereichs, der übrig ist, nachdem ein Bereich des Überlappungsbereichs von einem Bereich abgezogen ist, der durch den Weg entlang einer Kante und die vertikale Grenzlinie und horizontale Grenzlinie auf der Innenseite des Weges entlang einer Kante umschlossen ist, als der Gehbereich.

3. Verfahren nach Anspruch 2, **dadurch gekennzeichnet, dass** das Steuern des autonomen mobilen Roboters zum Gehen, bis der Weg entlang einer Kante des Gehens entlang der Wandkante oder der Kante des Objekts an der Wand die zweite zuvor festgelegte Bedingung erfüllt, in S327 die folgenden Schritte umfasst:
S3271: Erstellen eines XY-Achsen-Koordinatensystems durch Nehmen eines Startpositionspunktes des Weges entlang einer Kante als Ursprung; und
S3272: Bestimmen, ob eine horizontale Länge des Weges entlang einer Kante des autonomen mobilen Roboters, der entlang der Wandkante oder der Kante des Objekts an der Wand in der X-Achsen-Richtung geht, gleich der vierten zuvor festgelegten Länge ist oder nicht, oder Bestimmen, ob eine vertikale Länge des Weges entlang einer Kante des autonomen mobilen Roboters, der entlang der Wandkante oder der Kante des Objekts an der Wand in der Y-Achsen-Richtung geht, gleich der fünften zuvor festgelegten Länge ist oder nicht, wenn die horizontale Länge gleich der vierten zuvor festgelegten Länge ist oder die vertikale Länge gleich der fünften zuvor festgelegten Länge ist, Bestimmen, dass der Weg entlang einer Kante des autonomen mobilen Roboters, der entlang der Wandkante oder der Kante des Objekts an der Wand geht, die zweite zuvor festgelegte Bedingung erfüllt, wenn die horizontale Länge nicht gleich der vierten zuvor festgelegten Länge ist und die vertikale Länge nicht gleich der fünften zuvor festgelegten Länge ist, Bestimmen, dass der Weg entlang einer Kante des autonomen mobilen Roboters, der entlang der Wandkante oder der Kante des Objekts an der Wand geht, die zweite zuvor festgelegte Bedingung nicht erfüllt.

4. Verfahren nach Anspruch 1, **dadurch gekennzeichnet, dass** vor dem Bestimmen, ob der Weg des Weitergehens entlang der Kante der Weg entlang einer Kante ist, den der autonome mobile Roboter entlang gegangen ist oder nicht, nachdem der autonome mobile Roboter zu dem Haltepunkt entlang einer Kante zurückgekehrt, in S4, wobei das Verfahren ferner die folgenden Schritte umfasst:
S41: Bestimmen, ob der autonome mobile Roboter eine Positionierungskorrekturbedingung erfüllt oder nicht, wenn der autonome mobile Roboter die Positionierungskorrekturbedingung erfüllt, Eintreten in S42, wenn der autonome mobile Roboter die Positionierungskorrekturbedingung nicht erfüllt, Eintreten in S4 des Bestimmens, ob der Weg des Weitergehens entlang einer Kante der Weg entlang einer Kante ist, den der autonome mobile Roboter entlang gegangen ist oder nicht;
S42: Suchen eines Referenzpositionspunktes in einer zuerst bestimmten Positionierungskante;
S43: Gehen zu dem Referenzpositionspunkt;
S44: Bestimmen, ob ein Hindernis in einem zuvor festgelegten Bereich des Referenzpositionspunktes detektiert wird oder nicht, wenn das Hindernis detektiert wird, Gehen entlang einer Kante des Hindernisses in einer Richtung entlang einer Kante und Eintreten in S45 und wenn das Hindernis nicht detektiert wird, Bestimmen eines Referenzpositionspunktes in einer anderen benachbarten Positionierungskante und erneutes Ausführen von S43; und
S45: Bestimmen, ob eine Winkelrichtung des Gehens entlang der Kante des Hindernisses in einem Fehlerbereich einer Winkelrichtung der Positionierungskante ist oder nicht, wenn die Winkelrichtung in dem Fehlerbereich ist, Korrigieren der Position und Ausrichtung des autonomen mobilen Roboters in eine Position und Ausrichtung, die der Positionierungskante entspricht, und Eintreten in S4 des Bestimmens, ob der Weg des Weitergehens entlang der Kante der Weg entlang einer Kante ist, den der autonome mobile Roboter entlang gegangen ist oder nicht, und wenn die Winkelrichtung nicht in dem Fehlerbereich ist, Bestimmen eines Referenzpositionspunktes in einer anderen benachbarten Positionierungskante und erneutes Ausführen von S43.

5. Verfahren nach Anspruch 1, **dadurch gekennzeichnet, dass** vor dem Bestimmen, ob der Weg des Weitergehens entlang der Kante der Weg entlang einer Kante ist, den der autonome mobile Roboter entlang gegangen ist oder nicht, nachdem der autonome mobile Roboter zu dem Haltepunkt entlang einer Kante zurückkehrt, in S4, wobei das Verfahren ferner die folgenden Schritte umfasst:
S41: Bestimmen, ob der autonome mobile Roboter eine Positionierungskorrekturbedingung erfüllt oder nicht, wenn der autonome mobile Roboter die Positionierungskorrekturbedingung erfüllt, Eintreten in S42, wenn der autonome mobile Roboter die Positionierungskorrekturbedingung nicht erfüllt, Eintreten in S4 des Bestimmens, ob der Weg des Weitergehens entlang einer Kante der Weg entlang einer Kante ist, den der autonome mobile Roboter gegangen ist oder nicht;
S42: Suchen von zwei Positionierungskanten mit einem Schnittpunkt und Bestimmen des Schnittpunktes als Referenzpositionspunkt;
S43: Gehen zu dem Referenzpositionspunkt;
S44: Bestimmen, ob ein Hindernis in einem zuvor festgelegten Bereich des Referenzpositionspunktes detektiert wird oder nicht, wenn das Hindernis detektiert wird, Gehen entlang einer Kante des Hindernisses in der Richtung entlang einer Kante und Eintreten in S45 und wenn das Hindernis nicht detektiert wird, Bestimmen eines Schnittpunktes der anderen zwei Positionierungskanten als Referenzpositionspunkt und erneutes Ausführen von S43; und
S45: Bestimmen, ob eine Winkelrichtung des Gehens entlang der Kante des Hindernisses in einem Fehlerbereich einer Winkelrichtung der Positionierungskante ist oder nicht, wenn die Winkelrichtung in dem Fehlerbereich ist, Zurückkehren zu dem Haltepunkt entlang einer Kante und Eintreten in S4 des Bestimmens, ob der Weg des Weitergehens entlang einer Kante der Weg entlang einer Kante ist, den der autonome mobile Roboter entlang gegangen ist oder nicht, und wenn die Winkelrichtung nicht in dem Fehlerbereich ist, Korrigieren der Position und Ausrichtung des autonomen mobilen Roboters während des Gehens zu der Kreuzung zu einer Position und Ausrichtung, die dem Referenzpositionspunkt entspricht und Eintreten in S4 des Bestimmens, ob der Weg des Weitergehens entlang einer Kante der Weg entlang einer Kante ist, den der autonome mobile Roboter entlang gegangen ist oder nicht.

6. Verfahren nach Anspruch 4 oder 5, **dadurch gekennzeichnet, dass** das Bestimmen, ob der autonome mobile Roboter die Positionierungskorrekturbedingung erfüllt oder nicht, in S41 die folgenden Schritte umfasst:
S411: Bestimmen, ob eine Zeitspanne des Gehens entlang einer Kante des autonomen mobilen Roboters eine zuvor festgelegte Zeitspanne erreicht oder nicht, wenn die Zeitspanne des Gehens entlang einer Kante die zuvor festgelegte Zeitspanne erreicht, Bestimmen, dass der autonome mobile Roboter die Positionierungskorrekturbedingung erfüllt, und wenn die Zeitspanne des Gehens entlang einer Kante die zuvor festgelegte Zeitspanne nicht erreicht, Eintreten in S412; und
S412: Bestimmen, ob ein Gehweg entlang einer Kante des autonomen mobilen Roboters eine sechste zuvor festgelegte Länge erreicht oder nicht, wenn der Gehweg entlang einer Kante die sechste zuvor festgelegte Länge erreicht, Bestimmen, dass der autonome mobile Roboter die Positionierungskorrekturbedingung erfüllt, und wenn der Gehweg entlang einer Kante die sechste zuvor festgelegte Länge nicht erreicht, Bestimmen, dass der autonome mobile Roboter die Positionierungskorrekturbedingung nicht erfüllt.

## Revendications

1. Procédé de commande de marche le long d'un bord pour un robot mobile autonome, dans lequel le procédé comprend les étapes suivantes :
S1 : exécution d'une marche le long d'un bord et acquisition d'un chemin le long du bord (AB, BD, EG, EH, HA) du robot mobile autonome, le chemin le long du bord est un chemin que le robot mobile autonome a parcouru le long d'un bord de mur (AB, CD, 7) ou d'un bord d'un objet contre un mur, et passage à S2 ;
S2 : détermination si le chemin le long du bord du robot mobile autonome satisfait ou non à une première condition prédéfinie, lors de la détermination que le chemin le long du bord satisfait à la première condition prédéfinie, passage à S3, et lors de la détermination que le chemin le long du bord ne satisfait pas à la première condition prédéfinie, réexécution de S1 ;
S3 : définition d'une région de marche (a, b, c, d) sur la base du chemin le long du bord en prenant un point de position actuelle comme point d'arrêt le long du bord, et passage à S4, dans lequel une manière de définir la région de marche est une manière de définition par ajustement dynamique, après que la région de marche a été définie de la manière de définition par ajustement dynamique, lors de la définition d'une région de marche suivante, sur la base des limites d'une précédente région de marche et d'une forme d'un chemin le long du bord actuel, la région de marche précédente est ajustée de manière adaptative de sorte que la région de marche suivante partage un bord avec la région de marche précédente ;
S4 : commande au robot mobile autonome de revenir au point d'arrêt le long du bord après avoir couvert la région de marche de la manière de marche prédéfinie, détermination si le point d'arrêt le long du bord est un point de position de départ du chemin le long du bord au début de la marche le long du bord, lors de la détermination que le point d'arrêt le long du bord n'est pas le point de position de départ du chemin le long du bord au début de la marche le long du bord, réexécution de S1, et lors de la détermination que le point d'arrêt le long du bord est le point de position de départ du chemin le long du bord au début de la marche le long du bord, passage à S5 ; et
S5 : le robot mobile autonome termine sa marche le long du bord ;
**caractérisé en ce que** le procédé comprend en outre les étapes suivantes :
avant d'exécuter S1 pour la première fois, exécution de S01 : détermination si un capteur le long du bord sur un bord latéral d'un corps du robot mobile autonome détecte ou non un quelconque obstacle, lorsque le capteur le long du bord détecte l'obstacle, passage directement à S02, lorsque le capteur le long du bord ne détecte pas l'obstacle, commande au robot mobile autonome de marcher droit devant jusqu'à ce qu'un capteur d'obstacle situé à une extrémité avant du corps détecte un obstacle, ajustement d'une direction de marche du robot mobile autonome pour permettre au capteur le long du bord de détecter l'obstacle, puis passage à S02 ;
S02 : commande au robot mobile autonome de marcher le long d'un bord de l'obstacle en fonction d'une distance, détectée par le capteur le long du bord, entre le corps et l'obstacle, et maintien de la distance entre le corps et l'obstacle sur une première distance prédéfinie, et passage à S03 ;
S03 : détermination si une longueur du chemin le long du bord que le robot mobile autonome parcourt actuellement est ou non plus courte qu'une première longueur prédéfinie et si un angle de rotation du robot mobile autonome pendant le chemin le long du bord est supérieur ou non à un premier angle prédéfini, lorsque le chemin de marche le long du bord actuel est plus court que la première longueur prédéfinie et que l'angle de rotation est plus grand que le premier angle prédéfini, détermination que le robot mobile autonome ne marche pas le long du bord du mur ou du bord de l'objet contre le mur et passage à S04, et lorsque le chemin de marche le long du bord actuel n'est pas plus court que la première longueur prédéfinie et/ou que l'angle de rotation n'est pas plus grand que le premier angle prédéfini, détermination que le robot mobile autonome marche le long du bord du mur ou du bord de l'objet contre le mur et passage à S1, la première longueur prédéfinie étant définie selon une exigence de conception spécifique, dans lequel le premier angle prédéfini est de 270°, et le chemin de marche le long du bord actuel est le chemin de commande du robot mobile autonome pour qu'il marche le long du bord de l'obstacle en S02 ; et
S04 : commande au robot mobile autonome de tourner selon un deuxième angle prédéfini et de marcher droit devant jusqu'à ce que le capteur d'obstacle situé à l'extrémité avant du corps détecte un obstacle, ajustement de la direction de marche du robot mobile autonome pour permettre au capteur le long du bord de détecter l'obstacle puis passage à S02 ;
dans lequel la détermination si le chemin le long du bord du robot mobile autonome marchant le long du bord du mur ou du bord de l'objet contre le mur satisfait ou non à la première condition prédéfinie en S2 comprend les étapes suivantes :
S21 : établissement d'un système de coordonnées d'axe XY en prenant un point de position de départ du chemin le long du bord comme origine, dans lequel une direction de l'axe X du système de coordonnées d'axe XY est la direction horizontale, et une direction de l'axe Y du système de coordonnées d'axe XY est la direction verticale, et le point de position de départ du chemin le long du bord est un point de position où le robot mobile autonome commence à marcher le long du bord ;
S22 : détermination si une longueur horizontale du chemin le long du bord du robot mobile autonome marchant le long du bord du mur ou du bord de l'objet contre le mur dans une direction de l'axe X est égale ou non à une deuxième longueur prédéfinie, ou détermination si une longueur verticale du chemin le long du bord du robot mobile autonome marchant le long du bord du mur ou du bord de l'objet contre le mur dans une direction de l'axe Y est égale ou non à une troisième longueur prédéfinie, lorsque la longueur horizontale est égale à la deuxième longueur prédéfinie, ou que la longueur verticale est égale à la troisième longueur prédéfinie, ou que la longueur horizontale est égale à la deuxième longueur prédéfinie et que la longueur verticale est égale à la troisième longueur prédéfinie, passage à S23, lorsque la longueur horizontale n'est pas égale à la deuxième longueur prédéfinie et que la longueur verticale n'est pas égale à la troisième longueur prédéfinie, détermination que le chemin le long du bord du robot mobile autonome marchant le long du bord du mur ou du bord de l'objet contre le mur ne satisfait pas à la première condition prédéfinie ; et
S23 : détermination si le chemin le long du bord comprend ou non au moins un bord de positionnement s'étendant dans une direction linéaire, lorsque le chemin le long du bord comprend le bord de positionnement, détermination que le chemin le long du bord du robot mobile autonome marchant le long du bord du mur ou du bord de l'objet contre le mur satisfait à la première condition prédéfinie, lorsque le chemin le long du bord ne comprend pas le bord de positionnement, commande au robot mobile autonome de continuer à marcher le long du bord du mur ou du bord de l'objet contre le mur jusqu'à ce que le chemin le long du bord comprenne le bord de positionnement s'étendant dans la direction linéaire et détermination que le chemin le long du bord du robot mobile autonome marchant le long du bord du mur ou du bord de l'objet contre le mur satisfait à la première condition prédéfinie, le bord de positionnement est déterminé par le robot mobile autonome sur la base d'un changement d'angle détecté par un gyroscope en même temps que la marche le long du bord, dans lequel, après S1 et avant S2, comprenant en outre les étapes suivantes :
S 11 : détermination d'un chemin de marche le long duquel le robot mobile autonome continue à marcher le long de la même plage de direction sur une distance plus longue qu'une troisième distance prédéfinie comme un chemin rectiligne (AN) en fonction d'une position et d'une orientation du robot mobile autonome marchant le long du bord du mur ou du bord de l'objet contre le mur ;
S 12 : enregistrement d'une direction verticale par rapport au chemin rectiligne et pointant vers une direction d'un côté intérieur du chemin rectiligne comme une direction d'étalonnage ; et
S 13 : détermination des informations de position et d'orientation d'enregistrement du chemin rectiligne et de la direction d'étalonnage en tant que bord de positionnement,
dans lequel la définition de la région de marche sur la base du chemin le long du bord en prenant le point de position actuelle comme point d'arrêt le long du bord en S3 comprend les étapes suivantes :
S311 : détermination d'un point de position actuelle en tant que point d'arrêt le long du bord ;
S312 : détermination de deux points de position à une distance la plus longue dans la direction de l'axe X sur le chemin le long du bord en tant que premiers points de référence, construction de lignes verticales de référence passant par les premiers points de référence dans la direction de l'axe Y, détermination de deux points de position à une distance la plus longue dans la direction de l'axe Y sur le chemin le long du bord en tant que deuxièmes points de référence, et construction de lignes horizontales de référence passant par les deuxièmes points de référence dans la direction de l'axe X ;
S313 : détermination si une distance verticale entre les deux lignes verticales de référence est égale ou non à la deuxième longueur prédéfinie, lorsque la distance verticale est égale à la deuxième longueur prédéfinie, détermination des lignes verticales de référence en tant que lignes de limite verticales et passage à S314, lorsque la distance verticale n'est pas égale à la deuxième longueur prédéfinie, détermination des lignes horizontales de référence en tant que lignes de limite horizontales et passage à S315 ;
5314 : détermination si une distance verticale entre les deux lignes horizontales de référence est égale ou non à la troisième longueur prédéfinie, lorsque la distance verticale est égale à la troisième longueur prédéfinie, détermination des deux lignes horizontales de référence en tant que lignes de limite horizontales, et lorsque la distance verticale n'est pas égale à la troisième longueur prédéfinie, détermination d'une ligne horizontale de référence sur un côté extérieur du chemin le long du bord en tant que ligne de limite horizontale, détermination d'une ligne horizontale qui se trouve sur un côté intérieur du chemin le long du bord et parallèle à la ligne horizontale de référence et dont une distance verticale avec la ligne horizontale de référence sur le côté extérieur du chemin le long du bord est égale à la troisième longueur prédéfinie comme autre ligne de limite horizontale et détermination d'une région délimitée par le chemin le long du bord et la ligne de limite verticale et la ligne de limite horizontale sur le côté intérieur du chemin le long du bord, comme la région de marche ; et
5315 : détermination si la distance verticale entre les deux lignes verticales de référence est égale ou non à la deuxième longueur prédéfinie, lorsque la distance verticale est égale à la deuxième longueur prédéfinie, détermination des deux lignes verticales de référence comme les lignes de limite verticales, et lorsque la distance verticale n'est pas égale à la deuxième longueur prédéfinie, détermination de la ligne verticale de référence sur le côté extérieur du chemin le long du bord comme une ligne de limite verticale, détermination d'une ligne verticale qui se trouve sur le côté intérieur du chemin le long du bord et parallèle à la ligne verticale de référence et dont une distance verticale avec la ligne verticale de référence sur le côté extérieur du chemin le long du bord est égale à la deuxième longueur prédéfinie comme l'autre ligne de limite verticale et détermination d'une région délimitée par le chemin le long du bord et la ligne de limite verticale et la ligne de limite horizontale sur le côté intérieur du chemin le long du bord comme la région de marche.

2. Procédé selon la revendication 1, **caractérisé en ce que** le définition de la région de marche sur la base du chemin le long du bord en prenant le point de position actuelle comme le point d'arrêt le long du bord en S3 comprend les étapes suivantes :
5321 : détermination d'un point de position actuelle en tant que point d'arrêt le long du bord ;
5322 : détermination de deux points de position à une distance la plus longue dans la direction de l'axe X sur le chemin le long du bord en tant que premiers points de référence, construction de lignes verticales de référence passant par les premiers points de référence dans la direction de l'axe Y, détermination de deux points de position à une distance la plus longue dans la direction de l'axe Y sur le chemin le long du bord en tant que deuxièmes points de référence, et construction de lignes horizontales de référence passant par les deuxièmes points de référence dans la direction de l'axe X ;
5323 : détermination si une distance verticale entre les deux lignes verticales de référence est égale ou non à la deuxième longueur prédéfinie, lorsque la distance verticale est égale à la deuxième longueur prédéfinie, détermination des lignes verticales de référence en tant que lignes de limite verticales et passage à S324, lorsque la distance verticale n'est pas égale à la deuxième longueur prédéfinie, détermination des lignes horizontales de référence en tant que lignes de limite horizontales et passage à S325 ;
5324 : détermination si une distance verticale entre les deux lignes horizontales de référence est égale ou non à la troisième longueur prédéfinie, lorsque la distance verticale est égale à la troisième longueur prédéfinie, détermination des deux lignes horizontales de référence en tant que lignes de limite horizontales, et lorsque la distance verticale n'est pas égale à la troisième longueur prédéfinie, détermination de la ligne horizontale de référence sur un côté extérieur du chemin le long du bord comme une ligne de limite horizontale, détermination d'une ligne horizontale qui se trouve sur un côté intérieur du chemin le long du bord et parallèle à la ligne horizontale de référence et dont une distance verticale avec la ligne horizontale de référence sur le côté extérieur du chemin le long du bord est égale à la troisième longueur prédéfinie comme l'autre ligne de limite horizontale, détermination d'une région délimitée par le chemin le long du bord et la ligne de limite verticale et la ligne de limite horizontale sur le côté intérieur du chemin le long du bord en tant que région de marche prévue et passage à S326 ;
5325 : détermination si la distance verticale entre les deux lignes verticales de référence est égale ou non à la deuxième longueur prédéfinie, lorsque la distance verticale est égale à la deuxième longueur prédéfinie, détermination des deux lignes verticales de référence comme les lignes de limite verticales, et lorsque la distance verticale n'est pas égale à la deuxième longueur prédéfinie, détermination de la ligne verticale de référence sur le côté extérieur du chemin le long du bord comme une ligne de limite verticale, détermination d'une ligne verticale qui se trouve sur le côté intérieur du chemin le long du bord et parallèle à la ligne verticale de référence et dont une distance verticale avec la ligne verticale de référence sur le côté extérieur du chemin le long du bord est égale à la deuxième longueur prédéfinie comme l'autre ligne de limite verticale, détermination d'une région délimitée par le chemin le long du bord et la ligne de limite verticale et la ligne de limite horizontale sur le côté intérieur du chemin le long du bord comme la région de marche prévue et passage à S326 ;
5326 : détermination si une zone de chevauchement entre la région de marche prévue et une région de marche déterminée précédemment est plus grande ou non qu'une valeur de proportion prédéfinie d'une zone de la région de marche prévue, lorsque la zone de chevauchement est plus grande que la valeur de proportion prédéfinie de la zone, passage à S327, et lorsque la zone de chevauchement n'est pas plus grande que la valeur de proportion prédéfinie de la zone, détermination d'une région restante après qu'une région de la zone de chevauchement a été soustraite de la région de marche prévue comme la région de marche et passage à S4 ;
5327 : annulation du point d'arrêt le long du bord actuellement déterminé, et commande au robot mobile autonome de continuer à marcher le long du bord du mur ou du bord de l'objet contre le mur jusqu'à ce qu'un chemin de marche le long du bord le long du bord du mur ou du bord du l'objet contre le mur satisfasse à une deuxième condition prédéfinie ;
5328 : détermination d'un point de position actuelle en tant que point d'arrêt le long du bord ;
5329 : détermination de deux points de position à une distance la plus longue dans la direction de l'axe X sur le chemin le long du bord entre le point d'arrêt le long du bord actuel et le point d'arrêt le long du bord précédent en tant que premiers points de référence, construction de lignes verticales de référence passant par les premiers points de référence dans la direction de l'axe Y, détermination de deux points de position à une distance la plus longue dans la direction de l'axe Y sur le chemin le long du bord en tant que deuxièmes points de référence, construction des lignes horizontales de référence passant par les deuxièmes points de référence dans la direction de l'axe X, détermination si une distance verticale entre les deux lignes verticales de référence est égale ou non à une quatrième longueur prédéfinie, lorsque la distance verticale est égale à la quatrième longueur prédéfinie, détermination des lignes verticales de référence en tant que lignes de limite verticales et passage à S330, lorsque la distance verticale n'est pas égale à la quatrième longueur prédéfinie, détermination des lignes horizontales de référence en tant que lignes de limite horizontales et passage à S331 ;
5330 : détermination si une distance verticale entre les deux lignes horizontales de référence est égale ou non à une cinquième longueur prédéfinie, lorsque la distance verticale est égale à la cinquième longueur prédéfinie, détermination des deux lignes horizontales de référence en tant que lignes de limite horizontales, et lorsque la distance verticale n'est pas égale à la cinquième longueur prédéfinie, détermination de la ligne horizontale de référence sur le côté extérieur du chemin le long du bord comme une ligne de limite horizontale, détermination d'une ligne horizontale qui se trouve sur le côté intérieur du chemin le long du bord et parallèle à la ligne horizontale de référence et dont une distance verticale avec la ligne horizontale de référence sur le côté extérieur du chemin le long du bord est égale à la cinquième longueur prédéfinie comme l'autre ligne de limite horizontale, et détermination d'une région restante après qu'une région de la zone de chevauchement soit soustraite d'une région délimitée par le chemin le long du bord et la ligne de limite verticale et la ligne de limite horizontale sur le côté intérieur du chemin le long du bord comme la région de marche ;
S331 : détermination si la distance verticale entre les deux lignes verticales de référence est égale ou non à la quatrième longueur prédéfinie, lorsque la distance verticale est égale à la quatrième longueur prédéfinie, détermination des deux lignes verticales de référence comme les lignes de limite verticales, et lorsque la distance verticale n'est pas égale à la quatrième longueur prédéfinie, détermination de la ligne verticale de référence sur le côté extérieur du chemin le long du bord comme une ligne de limite verticale, détermination d'une ligne verticale qui se trouve sur le côté intérieur du chemin le long du bord et parallèle à la ligne verticale de référence et dont une distance verticale avec la ligne verticale de référence sur le côté extérieur du chemin le long du bord est égale à la quatrième longueur prédéfinie comme l'autre ligne de limite verticale, et détermination d'une région restante après qu'une région de la zone de chevauchement soit soustraite d'une région délimitée par le chemin le long du bord et la ligne de limite verticale et la ligne de limite horizontale sur le côté intérieur du chemin le long du bord comme la région de marche.

3. Procédé selon la revendication 2, **caractérisé en ce que** la commande au robot mobile autonome de marcher jusqu'à ce que le chemin de marche le long du bord le long du bord du mur ou du bord de l'objet contre le mur satisfasse à la deuxième condition prédéfinie en S327 comprend les étapes suivantes :
S3271 : établissement d'un système de coordonnées d'axe XY en prenant un point de position de départ du chemin le long du bord comme origine ; et
S3272 : détermination si une longueur horizontale du chemin le long du bord du robot mobile autonome marchant le long du bord du mur ou du bord de l'objet contre le mur dans la direction de l'axe X est égale ou non à la quatrième longueur prédéfinie, ou détermination si une longueur verticale du chemin le long du bord du robot mobile autonome marchant le long du bord du mur ou du bord de l'objet contre le mur dans la direction de l'axe Y est égale ou non à la cinquième longueur prédéfinie, lorsque la longueur horizontale est égale à la quatrième longueur prédéfinie ou la longueur verticale est égale à la cinquième longueur prédéfinie, détermination que le chemin le long du bord du robot mobile autonome marchant le long du bord du mur ou du bord de l'objet contre le mur satisfait à la deuxième condition prédéfinie, lorsque la longueur horizontale n'est pas égale à la quatrième longueur prédéfinie et que la longueur verticale n'est pas égale à la cinquième longueur prédéfinie, détermination que le chemin le long du bord du robot mobile autonome marche le long du bord du mur ou du bord de l'objet contre le mur ne satisfait pas à la deuxième condition prédéfinie.

4. Procédé selon la revendication 1, **caractérisé en ce qu'**avant la détermination si le chemin de poursuite de la marche le long du bord est le chemin le long du bord que le robot mobile autonome a parcouru ou non après le retour du robot mobile autonome au point d'arrêt le long du bord en S4, le procédé comprend en outre les étapes suivantes :
S41 : détermination si le robot mobile autonome satisfait ou non à une condition de correction de positionnement, lorsque le robot mobile autonome satisfait à la condition de correction de positionnement, passage à S42, lorsque le robot mobile autonome ne satisfait pas à la condition de correction de positionnement, passage à S4 pour déterminer si le chemin de poursuite de la marche le long du bord est ou non le chemin le long du bord que le robot mobile autonome a parcouru ;
S42 : recherche d'un point de position de référence dans un bord de positionnement déterminé en premier ;
S43 : marche jusqu'au point de position de référence ;
S44 : détermination si un obstacle est détecté ou non dans une plage prédéfinie du point de position de référence, lorsque l'obstacle est détecté, marche le long d'un bord de l'obstacle dans une direction le long du bord et passage à S45, et lorsque l'obstacle n'est pas détecté, détermination d'un point de position de référence dans un autre bord de positionnement adjacent et réexécution de S43 ; et
S45 : détermination si une direction angulaire de marche le long du bord de l'obstacle se trouve ou non dans une plage d'erreur d'une direction angulaire du bord de positionnement, lorsque la direction angulaire se trouve dans la plage d'erreur, correction de la position et l'orientation du robot mobile autonome vers une position et une orientation correspondant au bord de positionnement et passage à S4 pour déterminer si le chemin de poursuite de la marche le long du bord est le chemin le long du bord que le robot mobile autonome a parcouru ou non, et lorsque la direction angulaire ne se trouve pas dans la plage d'erreur, détermination d'un point de position de référence dans un autre bord de positionnement adjacent et réexécution de S43.

5. Procédé selon la revendication 1, **caractérisé en ce qu'**avant la détermination si le chemin de poursuite de la marche le long du bord est ou non le chemin le long du bord que le robot mobile autonome a parcouru après le retour du robot mobile autonome au point d'arrêt le long du bord en S4, le procédé comprend en outre les étapes suivantes :
S41 : détermination si le robot mobile autonome satisfait ou non à une condition de correction de positionnement, lorsque le robot mobile autonome satisfait à la condition de correction de positionnement, passage à S42, lorsque le robot mobile autonome ne satisfait pas à la condition de correction de positionnement, passage à S4 pour déterminer si le chemin de poursuite de marche le long du bord est ou non le chemin le long du bord que le robot mobile autonome a parcouru ;
S42 : recherche de deux bords de positionnement avec une intersection, et détermination de l'intersection en tant que point de position de référence ;
S43 : marche jusqu'au point de position de référence ;
S44 : détermination si un obstacle est détecté ou non dans une plage prédéfinie du point de position de référence, lorsque l'obstacle est détecté, marche le long d'un bord de l'obstacle dans la direction le long du bord et passage à S45, et lorsque l'obstacle n'est pas détecté, détermination d'une intersection de deux autres bords de positionnement en tant que point de position de référence et réexécution de S43 ; et
S45 : détermination si une direction angulaire de marche le long du bord de l'obstacle se trouve ou non dans une plage d'erreur d'une direction angulaire du bord de positionnement, lorsque la direction angulaire se trouve dans la plage d'erreur, retour au point d'arrêt le long du bord et passage à S4 pour déterminer si le chemin de poursuite de marche le long du bord est ou non le chemin le long du bord que le robot mobile autonome a parcouru, et lorsque la direction angulaire ne se trouve pas dans la plage d'erreur, correction de la position et l'orientation du robot mobile autonome pendant la marche jusqu'à l'intersection jusqu'à une position et une orientation correspondant au point de position de référence et passage à S4 pour déterminer si le chemin de poursuite de marche le long du bord est ou non le chemin le long du bord que le robot mobile autonome a parcouru.

6. Procédé selon la revendication 4 ou 5, **caractérisé en ce que** la détermination si le robot mobile autonome satisfait ou non à la condition de correction de positionnement en S41 comprend les étapes suivantes :
S411 : détermination si une période de temps de marche le long du bord du robot mobile autonome atteint ou non une période de temps prédéfinie, lorsque la période de temps de marche le long du bord atteint la période de temps prédéfinie, détermination que le robot mobile autonome satisfait à la condition de correction de positionnement, et lorsque la période de temps de marche le long du bord n'atteint pas la période de temps prédéfinie, passage à S412 ; et
S412 : détermination si un chemin de marche le long du bord du robot mobile autonome atteint ou non une sixième longueur prédéfinie, lorsque le chemin de marche le long du bord atteint la sixième longueur prédéfinie, détermination que le robot mobile autonome satisfait à la condition de correction de positionnement, et lorsque le chemin de marche le long du bord n'atteint pas la sixième longueur prédéfinie, détermination que le robot mobile autonome ne satisfait pas à la condition de correction de positionnement.
